(19) Europäisches Patentamt
European Patent Office
Office européen des brevets

(11) EP 3 523 286 B1

(12) **FASCICULE DE BREVET EUROPEEN**

(45) Date de publication et mention de la délivrance du brevet:
**24.02.2021 Bulletin 2021/08**

(21) Numéro de dépôt: **17793695.2**

(22) Date de dépôt: **02.10.2017**

(51) Int Cl.:
***C07D 317/38*** *(2006.01)* ***C08G 61/08*** *(2006.01)*
***C08G 61/12*** *(2006.01)* ***C08G 71/04*** *(2006.01)*
***C09J 165/00*** *(2006.01)*

(86) Numéro de dépôt international:
**PCT/FR2017/052700**

(87) Numéro de publication internationale:
**WO 2018/065715 (12.04.2018 Gazette 2018/15)**

(54) **NOUVEAUX POLYMÈRES HYDROCARBONÉS À GROUPEMENTS TERMINAUX EXO-VINYLÈNE CYCLOCARBONATE**

NEUARTIGE KOHLENWASSERSTOFFPOLYMERE MIT CYCLISCHEN EXO-VINYLEN-CARBONAT-ENDGRUPPEN

NOVEL HYDROCARBON POLYMERS HAVING EXO-VINYLENE CYCLIC CARBONATE TERMINAL GROUPS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.10.2016 FR 1659676**

(43) Date de publication de la demande:
**14.08.2019 Bulletin 2019/33**

(73) Titulaire: **BOSTIK SA**
**92700 Colombes (FR)**

(72) Inventeurs:
- **MICHAUD, Guillaume**
**60200 Compiegne (FR)**
- **FOUQUAY, Stéphane**
**76130 Mont Saint-Aignan (FR)**
- **SIMON, Frédéric**
**60400 Pont L'Eveque (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**EP-A1- 2 851 379**
**EP-A1- 2 851 403**
**WO-A1-2013/144299**
**WO-A1-2014/091173**
**WO-A1-2016/162627**
**DE-B- 1 098 953**
**US-A1- 2013 331 532**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention a pour objet des polymères hydrocarbonés comprenant deux groupements terminaux exo-vinylène cyclocarbonate, leur procédé de préparation et leur utilisation pour la fabrication de compositions de revêtements, de mastics ou d'adhésifs.

Il est connu d'utiliser des polyuréthanes pour fabriquer diverses compositions de revêtements, de mastics ou d'adhésifs.

Ces compositions peuvent être sous forme de compositions monocomposant ou bicomposant. Dans ce dernier cas, les réactifs nécessaires à la synthèse du polyuréthane, sont stockés de manière séparée, éventuellement en présence d'autres ingrédients (additifs), et sont destinés à être mélangés avant utilisation de la composition, pour synthétiser le polyuréthane au dernier moment.

La synthèse de polyuréthanes se fait traditionnellement par réaction d'un diisocyanate avec un diol.

Or les diisocyanates sont des composés toxiques en tant que tels, et sont généralement obtenus à partir de phosgène, lui-même très toxique par inhalation ou par contact. Le procédé de fabrication utilisé dans l'industrie met généralement en œ uvre la réaction d'une amine avec un excès de phosgène pour former un isocyanate.

De plus, les polyisocyanates sont des composés très sensibles en présence d'humidité atmosphérique et nécessitent de prendre des mesures appropriées pour éviter leur réticulation prématurée, et donc leur perte de réactivité, au cours de leur manipulation et de leur stockage (conditions anhydres).

La recherche d'alternatives à la synthèse de polyuréthanes, sans utiliser d'isocyanate (ou NIPU pour « Non Isocyanate PolyUrethane » en anglais, c'est-à-dire « polyuréthane sans isocyanate »), représente donc un enjeu majeur.

Cette recherche a fait l'objet de nombreuses études. Les pistes les plus étudiées concernent l'utilisation de polymères susceptibles de réagir avec des amines ou oligomères d'amines pour former des polyuréthanes ou dérivés structurellement proches des polyuréthanes.

La demande de brevet WO 2014/091173 au nom de Bostik et du CNRS, décrit des polymères hydrocarbonés comprenant deux groupements terminaux à terminaison (2-oxo-1,3-dioxolan-4-yl) susceptibles d'être obtenus par polymérisation par ouverture de cycle par métathèse à partir d'au moins une cyclooléfine cyclique, au moins un agent de transfert de chaine insaturé non cyclique comprenant un groupement terminal (2-oxo-1,3-dioxolan-4-yl), et au moins un catalyseur de métathèse.

Ces polymères peuvent ensuite réagir avec une (poly)amine pour former des polyuréthanes sans isocyanate possédant des fonctions hydroxyle qui peuvent être utilisés pour formuler des compositions de revêtements, de mastics ou d'adhésifs. Toutefois, cette réaction est relativement lente et reste à améliorer.

La présente invention a pour but de fournir de nouveaux intermédiaires de synthèse de polymères de type polyuréthane, destinés à la fabrication de compositions de revêtements, de mastics ou d'adhésifs, et remédiant en tout ou partie aux inconvénients de l'art antérieur.

En particulier, la présente invention a pour but de fournir de nouveaux intermédiaires dont la synthèse ne met pas en œuvre d'isocyanates et qui sont capables de réagir plus rapidement avec une (poly)amine, par rapport aux polymères hydrocarbonés à terminaisons (2-oxo-1,3-dioxolan-4-yl) de la demande WO 2014/091173.

Ainsi, la présente invention concerne un polymère hydrocarboné comprenant deux groupements terminaux exo-vinylène cyclocarbonate, ledit polymère hydrocarboné ayant la formule (I) :

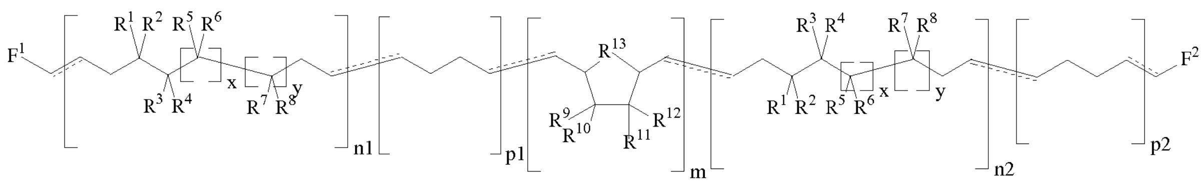

(I)

dans laquelle :

- $F^1$ et $F^2$ sont les radicaux monovalents exo-vinylène cyclocarbonate, de formules respectives (IIa) et (IIb) :

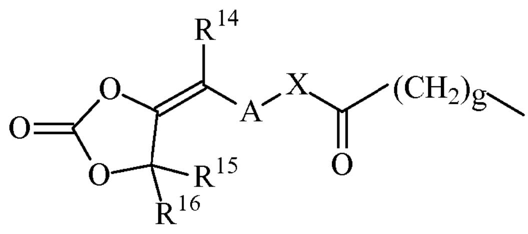

(IIa)

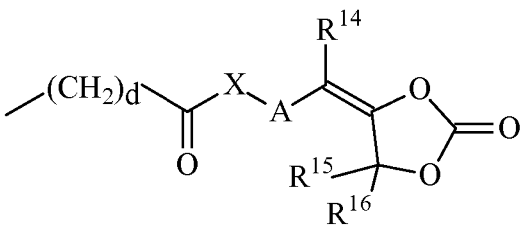

(IIb)

dans lesquelles :

- g et d, identiques ou différents, représentent un nombre entier égal à 0, 1, 2 ou 3 ;
- A représente un radical divalent C1-C6 alkylène ;
- X est un atome d'oxygène ou un groupe azoté $NR^{17}$ où $R^{17}$ est un groupe alkyle en C1-C6 ;
- $R^{14}$, $R^{15}$ et $R^{16}$, identiques ou différents, représentent chacun un atome d'hydrogène, un groupe alkyle en C1-C6, un groupe cycloalkyle en C5-C6, un groupe phényle ou un groupe alkylphényle avec une chaîne alkyle en C1-C4 ;

- chaque liaison carbone - carbone de la chaîne principale du polymère, notéereprésente une double liaison ou une simple liaison, conformément aux règles de valence de la chimie organique ;

- $R^1$, $R^2$, $R^3$, $R^4$, $R^5$, $R^6$, $R^7$ et $R^8$, identiques ou différents, représentent :

  - un atome d'hydrogène ou d'halogène ; ou
  - un radical comprenant de 1 à 22 atomes de carbone choisi parmi alkyle, alcényle, alcoxycarbonyle, alcényloxycarbonyle, alkylcarbonyloxy, alcénylcarbonyloxy, la chaîne hydrocarbonée dudit radical pouvant éventuellement être interrompue par au moins un atome d'oxygène ou un atome de soufre ; en outre:
  - au moins un des groupes $R^1$ à $R^8$ peut former, avec au moins un autre des groupes $R^1$ à $R^8$ et avec le ou les atomes de carbone auxquels lesdits groupes sont reliés, un cycle ou hétérocycle hydrocarboné saturé ou insaturé, éventuellement substitué, et comprenant de 3 à 10 chaînons; et
  - au moins une des paires ($R^1$, $R^2$), ($R^3$, $R^4$), ($R^5$, $R^6$) et ($R^7$, $R^8$) peut former, avec l'atome de carbone auquel ladite paire est reliée, un groupe carbonyle

  C=O ou un groupe de 2 atomes de carbone reliés par une double liaison : C=C, dont l'autre atome de carbone porte 2 substituants choisis parmi un atome d'hydrogène ou un radical $C_1$-$C_4$ alkyle ;

- x et y sont des nombres entiers, identiques ou différents, compris dans une fourchette allant de 0 à 6, la somme x + y étant comprise dans une fourchette allant de 0 à 6 ;

- $R^9$, $R^{10}$, $R^{11}$ et $R^{12}$, identiques ou différents, représentent :

  - un atome d'hydrogène ou d'halogène ; ou
  - un radical comprenant de 1 à 22 atomes de carbone et choisi parmi alkyle, alcényle, alcoxycarbonyle, alcényloxycarbonyle, alkylcarbonyloxy, alcénylcarbonyloxy, alkylcarbonyloxyalkyl, la chaîne hydrocarbonée dudit radical pouvant éventuellement être interrompue par au moins un atome d'oxygène ou un atome de soufre ; en outre:
  - au moins un des groupes $R^9$ à $R^{12}$ peut former, avec au moins un autre des groupes $R^9$ à $R^{12}$ et avec le ou les atomes de carbone auxquels lesdits groupes sont reliés, un cycle ou hétérocycle hydrocarboné saturé ou insaturé, éventuellement substitué, et comprenant de 3 à 10 chaînons; et
  - au moins une des paires ($R^9$, $R^{10}$) et ($R^{11}$, $R^{12}$) peut former avec l'atome de carbone auquel ladite paire est reliée un groupe de 2 atomes de carbone reliés par une double liaison : C=C, dont l'autre atome de carbone porte 2 substituants choisis parmi un atome d'hydrogène ou un radical $C_1$-$C_4$ alkyle ; et
  - l'atome de carbone porteur de l'un des groupes de la paire ($R^9$, $R^{10}$) peut être relié à l'atome de carbone porteur de l'un des groupes de la paire ($R^{11}$, $R^{12}$) par une double liaison, étant entendu que, conformément aux règles de valence, un seul des groupes de chacune de ces 2 paires est alors présent ;

- $R^{13}$ représente :

  - un atome d'oxygène ou de soufre, ou
  - un radical divalent $-CH_2-$, -C(=O)- ou $-NR^0-$ dans lequel $R^0$ est un radical alkyle ou alcényle comprenant de 1 à 22 atomes de carbone ;

- n1 et n2, identiques ou différents, sont chacun un nombre entier ou nul dont la somme est désignée par n ;

- m est un nombre entier supérieur ou égal à 0 ;

- p1 et p2, identiques ou différents, sont chacun un nombre entier ou nul dont la somme p1 + p2 est non nulle et vérifie l'équation : p1 + p2 = q x (z + 1) dans laquelle :

  - q est un nombre entier supérieur à 0 ; et
  - z est un nombre entier allant de 1 à 5 ; et

- n1, n2, m, p1 et p2 étant en outre tels que la masse moléculaire moyenne en nombre Mn du polymère de formule (I) est comprise dans une fourchette allant de 400 à 100 000 g/mol et son indice de polymolécularité est compris dans un domaine allant de 1,0 à 3,0.

Les divers groupes, radicaux et lettres qui sont compris dans la formule (I) et qui sont définis ci-dessus, conservent tout au long du présent texte, et, en l'absence d'indication contraire, la même définition.

Les variantes suivantes du polymère de formule (I), prises individuellement ou en combinaison, sont particulièrement préférées :

- g ou d sont égaux à 0 ;
- A représente un radical divalent C1-C3 alkylène ;
- X est l'atome d'oxygène ou un groupe azoté $NR^{17}$ où $R^{17}$ est un groupe alkyle en C1-C3 ;
- $R^{14}$ est un atome d'hydrogène ;
- $R^{15}$ et $R^{16}$, identiques ou différents, représentent chacun un groupe alkyle en C1-C3 ;
- $R^1$, $R^2$, $R^3$, $R^4$, $R^5$, $R^6$, $R^7$ et $R^8$ représentent un atome d'hydrogène ou un radical alkyle comprenant de 1 à 14 atomes de carbone, et encore plus préférentiellement de 1 à 8 ;
- les nombres entiers x et y sont compris dans une fourchette allant de 0 à 2, la somme x + y étant comprise dans une fourchette allant de de 0 à 2 ;
- $R^9$, $R^{10}$, $R^{11}$ et $R^{12}$ représentent un atome d'hydrogène ou un radical dont la partie hydrocarbonée comprend de 1 à 14 atomes de carbone, et encore plus préférentiellement de 1 à 8 ;
- z est un nombre entier égal à 1 ou 2 ; et/ou
- la masse moléculaire moyenne en nombre Mn est comprise dans une fourchette allant de 1000 à 50 000 g/mol, et l'indice de polymolécularité est compris dans un domaine allant de 1,4 à 2,0.

Selon d'autres variantes plus particulièrement préférées du polymère de formule (I) prises également individuellement ou en combinaison :

- g et d sont chacun égaux à 0 ;
- A représente le radical divalent $-(CH_2)_2-$ ;
- X est l'atome d'oxygène ou le groupe azoté $NR^{17}$ où $R^{17}$ est le radical méthyle ;
- $R^{15}$ et $R^{16}$ sont chacun un méthyle ;
- x est égal à 1 et y est égal à 1 ;
- au plus un des groupes pris parmi ($R^1$, $R^2$, $R^3$, $R^4$, $R^5$, $R^6$, $R^7$ et $R^8$) est un radical $C_1$-$C_8$ alkyle et tous les autres représentent un atome d'hydrogène ;
- au plus un des groupes pris parmi ($R^9$, $R^{10}$, $R^{11}$ et $R^{12}$) est un radical $C_1$-$C_8$ alkoxycarbonyle et tous les autres représentent un atome d'hydrogène ; et/ou
- $R^{13}$, représente un radical $-CH_2-$ ou un atome d'oxygène.

La chaîne principale du polymère de formule (I) comprend donc un, deux ou trois motifs de répétition :

- un premier motif de répétition répété p1 + p2 fois,
- un second motif de répétition, optionnel, répété n1 + n2 fois ; et

- un troisième motif de répétition, optionnel, répété m fois.

Lorsque la chaîne principale du polymère de formule (I) comprend plusieurs motifs, il est entendu que la répartition desdits motifs sur ladite chaîne principale est statistique, et que le polymère de formule (I) est alors un polymère statistique.

Ainsi qu'il apparaît ci-dessus, les groupements terminaux $F^1$ et $F^2$ sont généralement symétriques par rapport à la chaîne principale, c'est-à-dire qu'ils se correspondent sensiblement, à l'exception des indices g et d.

Par « hétérocycle », on entend un cycle hydrocarboné pouvant comprendre un autre atome que le carbone dans la chaîne du cycle, tel que par exemple les atomes d'oxygène, de soufre ou d'azote.

Par « groupement terminal », on entend un groupement situé à l'une des 2 extrémités de la chaîne principale du polymère, laquelle est constituée par un ou plusieurs motifs de répétition.

L'indice de polymolécularité (également dénommé en anglais polydispersity index ou PDI) est défini comme le rapport Mw / Mn, c'est-à-dire le rapport de la masse moléculaire moyenne en poids à la masse moléculaire moyenne en nombre du polymère.

Dans le présent texte, les deux masses moléculaires moyennes Mn et Mw sont mesurées par chromatographie d'exclusion stérique (ou SEC, acronyme de « Size Exclusion Chromatography » en anglais) qui est également désignée par les termes de chromatographie par perméation de gel (ou par le sigle anglais correspondant GPC). L'étalonnage mis en œuvre est usuellement un étalonnage PEG (PolyEthylèneGlycol) ou PS (PolyStyrène), de préférence PS.

Si g = 0 ou d = 0, alors il n'y a pas de radical $-(CH_2)-$ dans les radicaux de formule (IIa) ou (IIb). En d'autres termes, le radical : $-(CH_2)_g-$ ou $-(CH_2)_d-$ est remplacé par une simple liaison.

Lorsque un des indices n1, n2, m, x ou y qui s'applique à un ensemble de deux crochets est égal à zéro, cela signifie qu'il n'y a pas de groupe entre les crochets auxquels cet indice s'applique. Ainsi par exemple le groupement :

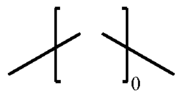

représente une simple liaison : -, et le groupement :

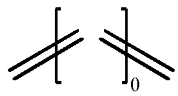

représente une double liaison :

.

Les polymères de formule (I) selon l'invention sont particulièrement homogènes et stables en température.

Ils peuvent former, après une réaction de polyaddition à une température inférieure à 100 °C, voire à température ambiante, avec un composé aminé comprenant au moins deux groupements amines (comme une polyamine primaire et/ou secondaire) un polyuréthane constitutif d'un joint adhésif. La vitesse de ladite réaction est en outre avantageusement plus rapide que celle offerte par les polymères hydrocarbonés comprenant deux groupements terminaux à terminaison (2-oxo-1,3-dioxolan-4-yl) de la demande WO 2014/091173 précitée.

Le joint adhésif ainsi formé présente des valeurs de cohésion élevées, en particulier supérieures à 1,5 MPa. De telles valeurs de cohésion permettent une utilisation dudit polymère comme adhésif, par exemple comme joint d'étanchéité sur un support usuel (béton, verre, marbre), dans le domaine du bâtiment, ou encore pour le collage de vitrages dans l'industrie automobile et navale.

Les polymères de formule (I) selon l'invention peuvent être, à température ambiante (i.e. environ 20 °C), des solides, des liquides visqueux ou des liquides très fluides.

Quand le polymère selon l'invention est solide à température ambiante, il est thermoplastique, c'est-à-dire déformable et fusible à chaud (i.e. à une température supérieure à la température ambiante). Il peut donc être utilisé, en combinaison avec par exemple une diamine, en tant qu'adhésif thermofusible bicomposant et appliqué à chaud sur l'interface de substrats à assembler au niveau de leur surface de tangence. Par solidification à température ambiante, un joint adhésif solidarisant les substrats et constitué d'un polyuréthane est ainsi rapidement créé, donnant alors à l'adhésif des propriétés avantageuses de temps de prise réduit.

Selon une première alternative d'une variante préférée du polymère selon l'invention, lorsque m est non nul et que n1 et n2 sont chacun égal à 0 (correspondant à la présence dans la chaîne principale du polymère des 2 seuls motifs de répétition répétés respectivement p1 + p2 fois et m fois), alors le rapport :

$$m / (p1 + p2 + m)$$

est compris dans l'intervalle allant de 30 à 70 %, et, de façon davantage préférée, est égal à environ 50 %.

Selon une deuxième alternative de cette même variante préférée, lorsque m est égal à 0 et que la somme n1 + n2 est non nulle (correspondant à la présence dans la chaîne principale du polymère des 2 seuls motifs de répétition répétés respectivement p1 + p2 fois et n1 + n2 fois), alors au moins un des groupes $R^1$, $R^2$, $R^3$, $R^4$, $R^5$, $R^6$, $R^7$ et $R^8$ est autre qu'un atome d'hydrogène, et le rapport :

$$(n1 + n2) / (p1 + p2 + n1 + n2)$$

est compris dans l'intervalle allant de 30 à 70 %, et, de façon davantage préférée, est égal à environ 50 %.

Selon une troisième alternative de ladite variante préférée, lorsque m est non nul, que la somme n1 + n2 est non nulle (correspondant à la présence dans la chaîne principale du polymère des 3 motifs de répétition) et que chacun des groupes $R^1$, $R^2$, $R^3$, $R^4$, $R^5$, $R^6$, $R^7$ et $R^8$ est un atome d'hydrogène, alors le rapport :

$$m / ( p1 + p2 + n1 + n2 + m)$$

est compris dans l'intervalle allant de 30 à 70 %, et, de façon davantage préférée, est égal à environ 50 %.

Selon une quatrième alternative de ladite variante préférée, lorsque m est non nul, que la somme n1 + n2 est non nulle (correspondant à la présence dans la chaîne principale du polymère des 3 motifs de répétition) et que au moins un des groupes $R^1$, $R^2$, $R^3$, $R^4$, $R^5$, $R^6$, $R^7$ et $R^8$ est autre qu'un atome d'hydrogène, alors le rapport :

$$(m + n1 + n2) / ( p1 + p2 + n1 + n2 + m)$$

est compris dans l'intervalle allant de 30 à 70 %, et, de façon davantage préférée, est égal à environ 50 %.

Conformément aux 4 alternatives de ladite variante préférée, le polymère de formule (I) se présente généralement sous la forme de liquide visqueux, présentant généralement une viscosité Brookfield à 23°C comprise entre 1 mPa.s et 500 Pa.s, de préférence entre 1 à 150 Pa.s et encore plus préférentiellement de 1 à 50 Pa.s. Il est alors avantageusement facile à mettre en œuvre et peut être combiné à un constituant supplémentaire tel qu'une résine tackifiante ou une charge, pour former une composition adhésive.

De manière générale, la viscosité peut être mesurée de manière bien connue de l'homme du métier. En particulier, la viscosité peut être mesurée avec un viscosimètre Brookfield, en choisissant l'aiguille et la vitesse du module de manière appropriée en fonction de la gamme de viscosité à mesurer.

Selon un mode de réalisation de l'invention, toutes les liaisons ------ de la formule (I) sont des doubles liaisons carbone-carbone, et la formule (I) devient alors la formule (I') suivante :

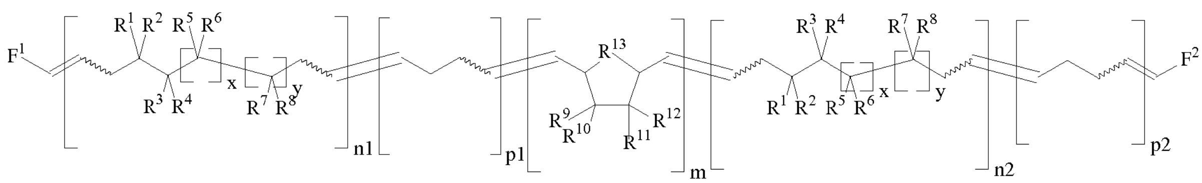

(I')

dans laquelle x, y, n1, n2, m, p1, p2, $F^1$, $F^2$, $R^1$, $R^2$, $R^3$, $R^4$, $R^5$, $R^6$, $R^7$, $R^8$, $R^9$, $R^{10}$, $R^{11}$, $R^{12}$ et $R^{13}$ ont les significations données précédemment et la liaison ∿∿∿ est une liaison orientée géométriquement d'un côté ou de l'autre par rapport à la double liaison (cis ou trans).

Chacune des doubles liaisons du polymère de formule (I') est orientée géométriquement cis ou trans, de

préférence est d'orientation cis. Les isomères géométriques du polymère de formule (I') sont généralement présents en proportions variables, avec le plus souvent une majorité de doubles liaisons orientées cis (Z), et préférentiellement toutes orientées cis (Z). Il est aussi possible selon l'invention d'obtenir un seul des isomères géométriques, selon les conditions réactionnelles et en particulier selon la nature du catalyseur utilisé.

Selon un autre mode de réalisation de l'invention, toutes les liaisonsde la formule (I) sont des liaisons simples carbone-carbone, et la formule (I) devient alors la formule (IH) ci-dessous :

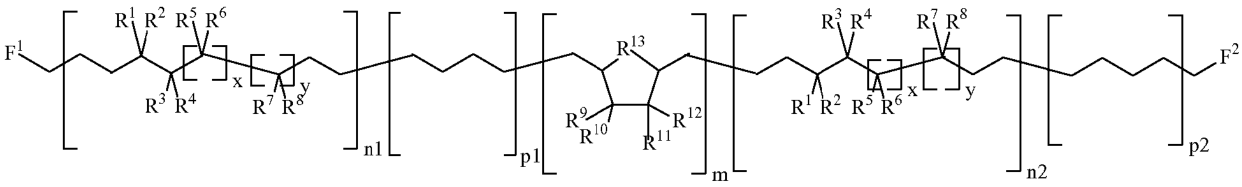

(IH)

dans laquelle x, y, n1, n2, m, p1, p2, $F^1$, $F^2$, $R^1$, $R^2$, $R^3$, $R^4$, $R^5$, $R^6$, $R^7$, $R^8$, $R^9$, $R^{10}$, $R^{11}$, $R^{12}$ et $R^{13}$ ont les significations données précédemment.

La formule (IH) illustre le cas où la chaîne principale du polymère de formule (I) est saturée, c'est-à-dire ne comporte que des liaisons saturées.

Dans ce cas, de façon préférée, x est égal à 1 et y est égal à 1.

Selon un mode de réalisation du polymère de formule (I) selon l'invention, m est égal à 0, le polymère étant de formule (II) suivante :

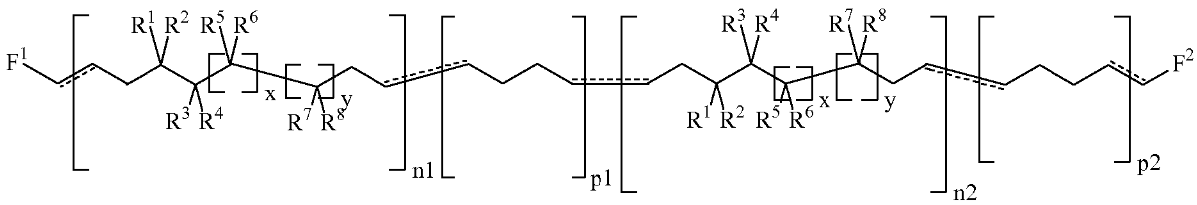

(II)

dans laquelle x, y, n1, n2, p1, p2, $F^1$, $F^2$, $R^1$, $R^2$, $R^3$, $R^4$, $R^5$, $R^6$, $R^7$ et $R^8$, ont les significations données précédemment.

De façon particulièrement préférée, x est égal à 1 et y est égal à 1.

Selon une forme particulièrement préférée de ce mode de réalisation, toutes les liaisons ------ de la formule (II) sont des doubles liaisons carbone-carbone, et la formule (II) devient alors la formule (II') suivante :

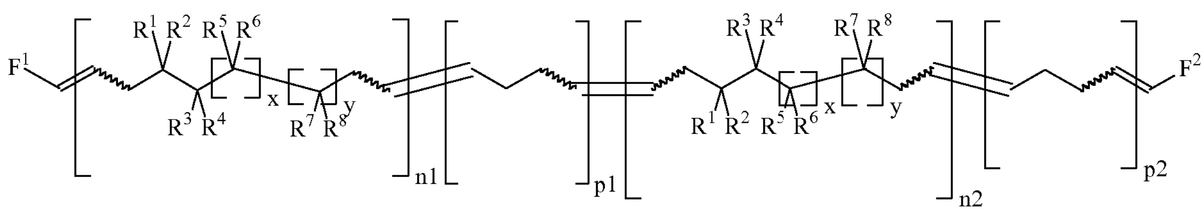

(II')

Les formules (II) et (II') illustrent le cas où la chaîne principale du polymère de formule (1) comprend seulement deux motifs de répétition, répétés respectivement n1 + n2 et p1+p2 fois.

Selon un autre mode de réalisation du polymère de formule (I) selon l'invention, n1 et n2 sont chacun égal à 0, le polymère étant de formule (III) suivante :

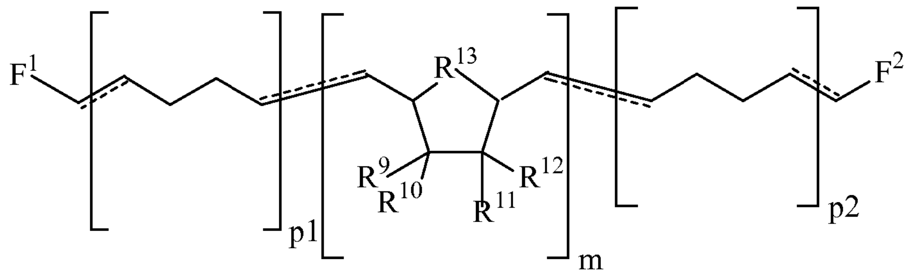

(III)

dans laquelle m, p1, p2 $F^1$, $F^2$, $R^9$, $R^{10}$, $R^{11}$, $R^{12}$ et $R^{13}$ ont les significations données précédemment.

Selon une forme particulièrement préférée de ce mode de réalisation, toutes les liaisons ------ de la formule (III) sont des doubles liaisons carbone-carbone, et la formule (III) devient alors la formule (III') suivante :

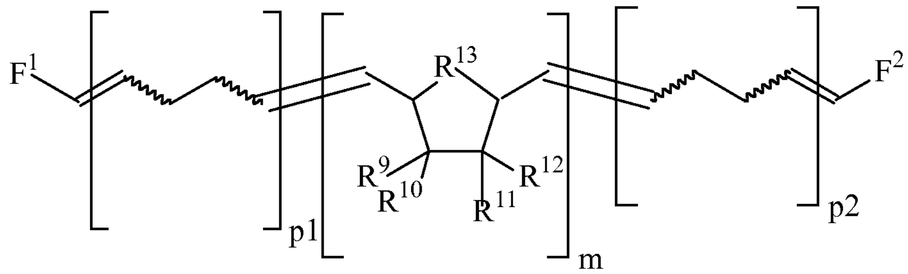

(III')

Les formules (III) et (III') illustrent des cas où la chaîne principale du polymère de formule (I) comprend seulement deux motifs de répétition, répétés respectivement (p1 + p2) fois et m fois.

Selon encore un autre mode de réalisation du polymère de formule (I) selon l'invention, n1, n2 et m sont chacun égal à 0, le polymère étant de formule (IV) suivante :

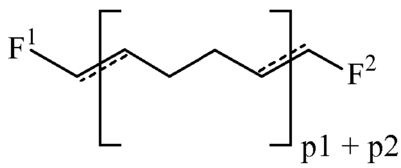

(IV)

dans laquelle p1, p2, $F^1$, $F^2$ ont les significations données précédemment.

Selon une forme particulièrement préférée de ce mode de réalisation, toutes les liaisons ------ de la formule (IV) sont des doubles liaisons carbone-carbone, et la formule (IV) devient alors la formule (IV') suivante :

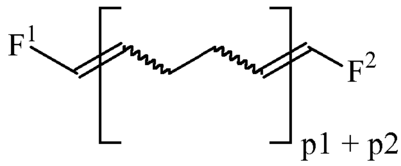

(IV')

Les formules (IV) et (IV') illustrent le cas où la chaîne principale du polymère de formule (I) comprend un seul motif de répétition, répété p1 + p2 fois.

L'invention concerne encore un procédé de préparation d'un polymère hydrocarboné comprenant deux groupements terminaux exo-vinylène cyclocarbonate de formule (I) selon l'invention, ledit procédé comprenant une étape de polymérisation par ouverture de cycle par métathèse (également dénommée « Ring-Opening Metathesis Polymerization » ou ROMP en anglais), en présence :

(a) d'un catalyseur de métathèse ;
(b) d'un agent de transfert de chaîne (désigné également ci-après par CTA pour « Chain Transfer Agent » en anglais) qui est choisi parmi un mono ou di-exo vinylène cyclocarbonate de formule respective (B1) ou (B2) suivante :

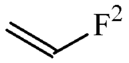
(B1)

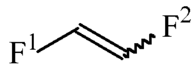
(B2)

étant entendu que dans les formules ci-dessus :

- la liaison  est une liaison simple carbone-carbone orientée géométriquement d'un côté ou de l'autre par rapport à la double liaison (cis ou trans) ;
- $F^1$ et $F^2$ sont tels que définis précédemment ;

(c) d'un composé de formule (C) :

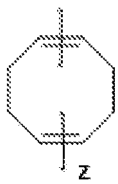
(C)

dans laquelle z est tel que défini précédemment ; et
(d) éventuellement d'un composé de formule (D) :

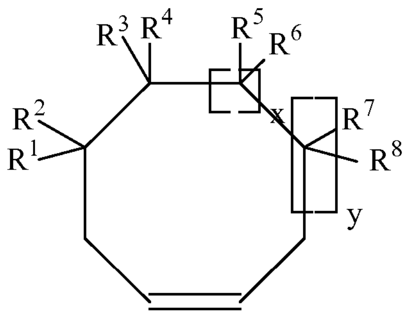
(D)

dans laquelle $R^1$, $R^2$, $R^3$, $R^4$, $R^5$, $R^6$, $R^7$, $R^8$, x et y sont tels que définis précédemment ; et
(e) éventuellement d'un composé de formule (E) :

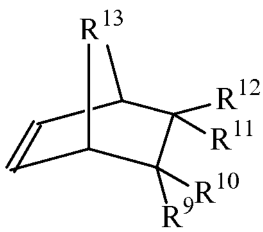
(E)

dans laquelle $R^9$, $R^{10}$, $R^{11}$, $R^{12}$ et $R^{13}$ sont tels que définis précédemment ;

ladite étape de polymérisation étant en outre mise en œuvre :

- pendant une durée allant de 2 à 24 heures et à une température comprise dans un intervalle de 20 à 60 °C ; et
- avec un rapport r égal au rapport du nombre de moles dudit CTA :
  - au nombre de moles du composé de formule (C), si celui-ci est le seul réactif autre que le CTA mis en œuvre dans la réaction, ou
  - à la somme du nombre de moles du composé de formule (C) et du nombre de moles des composés de formule (D) et/ou (E), si les composés de formule (D) et/ou (E) sont également mis en œuvre dans la réaction,

compris dans un intervalle allant de 0,0010 à 1,0.

Lorsque le polymère hydrocarboné comprenant deux groupements terminaux exo-vinylène cyclocarbonate selon l'invention possède une chaine principale saturée, tel qu'envisagé par la formule (1H) définie précédemment, le procédé de préparation ci-dessus comprend une étape d'hydrogénation sélective des doubles liaisons du polymère.

Dans la définition de l'étape de polymérisation donnée ci-dessus, il est bien entendu que l'article indéfini "un", en tant qu'il se rapporte à un réactif ou au catalyseur mis en œuvre ou bien au produit formé, doit s'interpréter comme signifiant "au moins un", c'est-à-dire "un ou plusieurs".

La durée et la température de la réaction dépendent généralement de ses conditions de mise en œuvre notamment de la nature du solvant utilisé, et en particulier du taux de charge catalytique. L'homme du métier est à même de les adapter en fonction des circonstances.

Ainsi, de préférence, la durée de la réaction de polymérisation va de 2 à 10 heures, et le rapport r défini ci-dessus est compris dans un intervalle allant de 0,0020 à 0,5.

La polymérisation par ouverture de cycle par métathèse est une réaction bien connue de l'homme du métier, qui est mise en œuvre ici en présence d'un composé CTA particulier de formule (B1) ou (B2).

**(a) Catalyseur de métathèse** :

Le catalyseur de métathèse est, de préférence, un catalyseur comprenant du ruthénium, et de façon encore plus préférée un catalyseur de Grubbs,

Un tel catalyseur est généralement un produit du commerce.

Le catalyseur de métathèse est le plus souvent un catalyseur de métal de transition dont notamment un catalyseur comprenant du ruthénium le plus souvent sous forme de complexe(s) du ruthénium tel qu'un complexe ruthénium-carbène.

Par catalyseur de Grubbs, on entend généralement selon l'invention un catalyseur de Grubbs de 1ère ou 2ème génération, mais aussi tout autre catalyseur de type Grubbs (de type ruthénium-carbène) ou Hoveyda-Grubbs accessible à l'homme du métier, tel que par exemple les catalyseurs de Grubbs substitués décrits dans le brevet US 5,849,851.

Un catalyseur de Grubbs 1ère génération est généralement de formule (G1) :

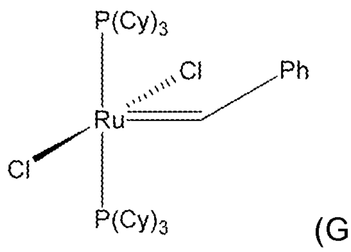

(G1)

dans laquelle Ph est le phényle, Cy est le cyclohexyle, et le groupe $P(Cy)_3$ est un groupe tricyclohexylphosphine. La dénomination IUPAC de ce composé est : benzylidène-bis(tricyclohexylphosphine) dichlororuthénium (de numéro CAS 172222-30-9). Un tel catalyseur est disponible notamment auprès de la société Aldrich.

Un catalyseur de Grubbs 2ème génération (ou G2) est généralement de formule (G2) :

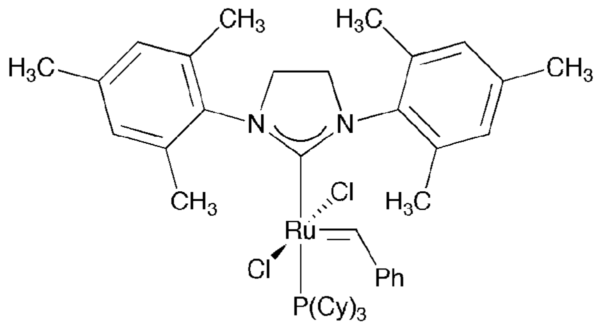

(G2)

dans laquelle Ph est le phényle et Cy est le cyclohexyle.
La dénomination IUPAC de la deuxième génération de ce catalyseur est benzylidène [1,3-bis(2,4,6-triméthylphényl)-2-imidazolidinylidène] dichloro(tricyclohexylphosphine) ruthénium (de numéro CAS 246047-72-3). Ce catalyseur est également disponible auprès de la société Aldrich.

**(b) CTA de formule (B1) ou (B2) :**

Selon un premier mode de réalisation du procédé de préparation selon l'invention (appelé « voie CTA monofonctionnel »), le CTA utilisé est de formule (B1), représentée également par la formule équivalente (B'1) ci-dessous :

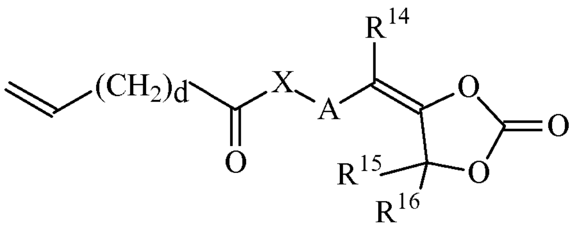

(B'1)

dans laquelle d, X, A, $R^{14}$, $R^{15}$ et $R^{16}$ sont tels que définis précédemment.
Le composé de formule (B1) peut être obtenu selon le schéma (1) ci-dessous, en suivant les modes opératoires décrits dans les demandes de brevet DE1098953 et DE3433403 :

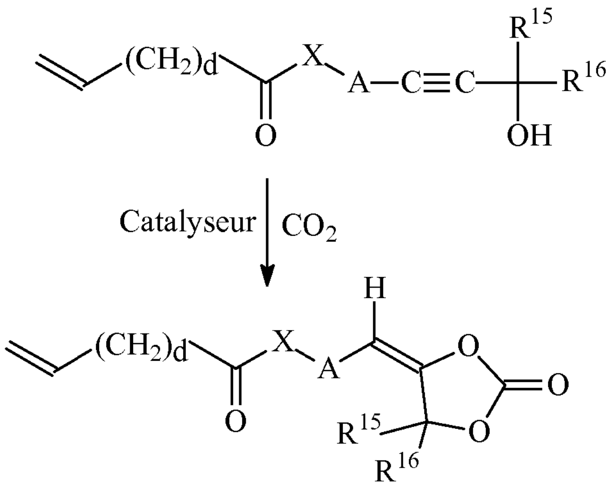


**Schéma (1)**

Le CTA correspondant à la voie CTA monofonctionnel et répondant à la formule

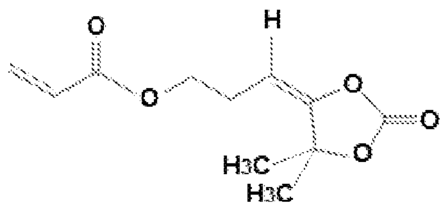

est dénommé le [(5,5-diméthyl-2-oxo-1,3-dioxolan-4-ylidène)propyl] acrylate. Il est désigné ci-après par $CTA^1$.

Le CTA correspondant également à la voie CTA monofonctionnel, mais répondant à la formule

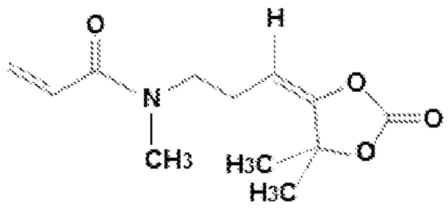

est dénommé la [N-méthyl,(5,5-diméthyl-2-oxo-1,3-dioxolan-4-ylidène)propyl] acrylamide. Il est désigné ci-après par $CTA^2$.

Selon un deuxième mode de réalisation du procédé de préparation selon l'invention (appelé « voie CTA difonctionnel »), le CTA utilisé est de formule (B2), représentée également par la formule équivalente (B'2) ci-dessous :

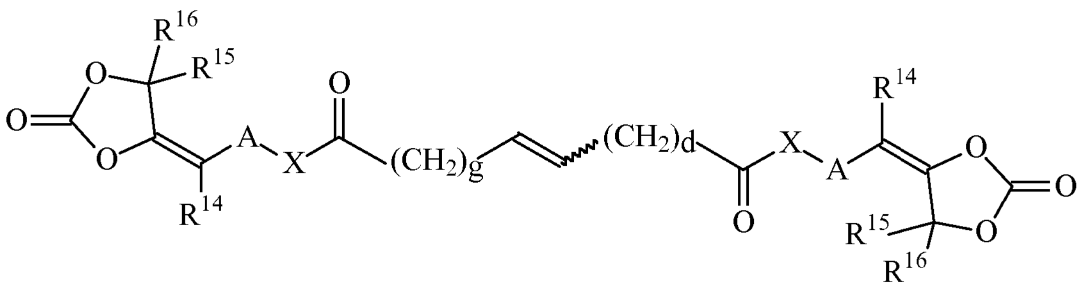

(B'2)

dans laquelle g, d, X, A, $R^{14}$, $R^{15}$ et $R^{16}$ sont tels que définis précédemment.

Le composé de formule (B2) peut être obtenu selon le schéma (2) ci-dessous, correspondant à une variante originale du schéma (1) :

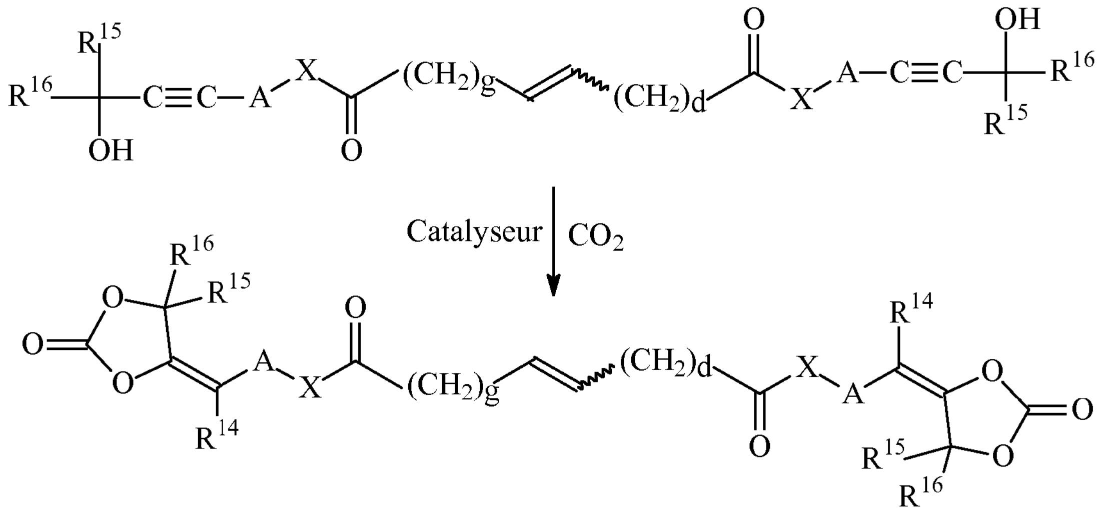


**Schéma (2)**

Le CTA correspondant à la voie CTA difonctionnel et répondant à la formule

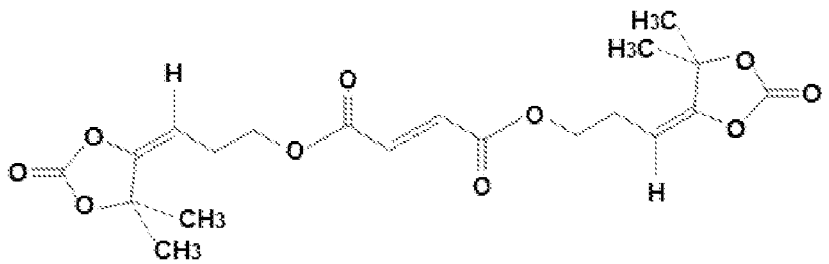

est dénommé le bis[(5,5-diméthyl-2-oxo-1,3-dioxolan-4-ylidène)propyl] fumarate acrylate. Il est désigné ci-après par $CTA^3$.

Le CTA correspondant à la voie CTA difonctionnel et répondant à la formule

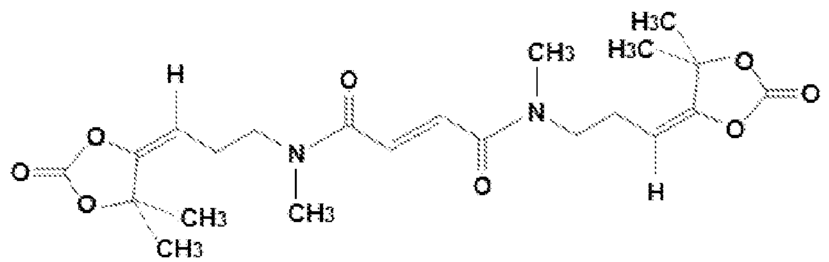

est dénommé la bis[(5,5-diméthyl-2-oxo-1,3-dioxolan-4-ylidène)propyl] fumaramide. Il est désigné ci-après par $CTA^4$.

**(c) composé de formule (C) :**

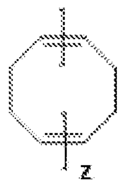

(C)

Le composé cyclique de formule (C) comprend généralement de 8 à 32 atomes de carbones.

De préférence, il est choisi dans le groupe formé par :

- le 1,5-cyclooctadiène (désigné ci-après par COD) de formule :

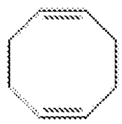

(correspondant à z =1)

- et le 1,5,9-cyclododecatriène (désigné ci-après par CDT) composé à 12 atomes de carbone de formule :

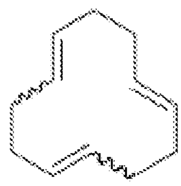

(correspondant à z =2)

ces 2 composés étant disponibles commercialement auprès des sociétés Evonik Degussa et Arkema France.

<u>**(d) composé de formule (D)**</u> :

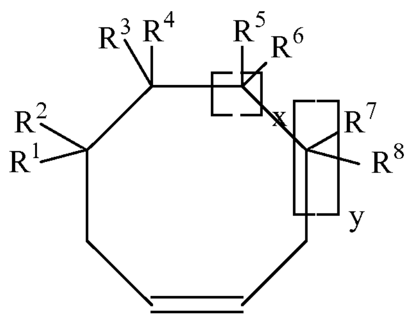

(D)

Le composé de formule (D) comprend généralement de 6 à 30, de préférence de 6 à 22, atomes de carbone.

De préférence :

- $R^1$, $R^2$, $R^3$, $R^4$, $R^5$, $R^6$, $R^7$ et $R^8$ représentent un atome d'hydrogène ou un radical alkyle comprenant de 1 à 14 atomes de carbone, et encore plus préférentiellement de 1 à 8 ;
- les nombres entiers x et y sont compris dans une fourchette allant de 0 à 2, la somme x + y étant comprise dans une fourchette allant de de 0 à 2.

Selon une variante encore davantage préférée :

- x est égal à 1 et y est égal à 1 et/ou
- au plus un des groupes pris parmi ($R^1$, $R^2$, $R^3$, $R^4$, $R^5$, $R^6$, $R^7$ et $R^8$) est un radical $C_1$-$C_8$ alkyle et tous les autres représentent un atome d'hydrogène.

Le composé de formule (D) est notamment choisi parmi :

- le cycloheptène, le cyclooctène, le cyclononène, le cyclodécène, le cycloundécène et le cyclododécène.
- le 5-époxy-cyclooctène, de formule :

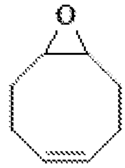

(disponible chez Aldrich),
- le 5-oxocyclooctène, de formule :

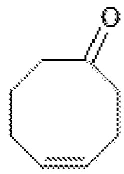

ou encore parmi un 5-alkyl-cyclooctène, de formule :

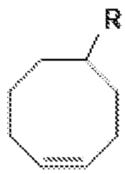

dans laquelle R est un radical alkyle comprenant de 1 à 22 atomes de carbone, de préférence 1 à 14 ; R étant par exemple le radical n-hexyle.

Les composés correspondant aux 2 dernières formules développées ci-dessus peuvent être préparés par un procédé généralisant le schéma réactionnel de l'exemple 9, notamment en réalisant l'alkylation de l'intermédiaire 2 par un réactif de Grignard approprié.

Parmi ces composés, sont tout particulièrement préférés le cyclooctène et le 5-n-hexyl-cyclooctène.

**(e) composé de formule (E) :**

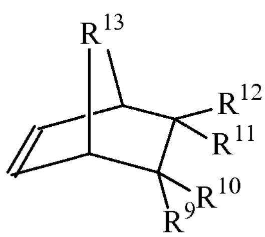

(E)

Le composé de formule (E) comprend généralement de 6 à 30, de préférence de 6 à 22, atomes de carbone.

De préférence :

- $R^9$, $R^{10}$, $R^{11}$ et $R^{12}$ représentent un atome d'hydrogène ou un radical alkyle ou alkoxycarbonyle comprenant de 1 à 14 atomes de carbone, et encore plus préférentiellement de 1 à 8 ;
- le radical $R^0$, compris dans le groupe $-NR^0$ qui est l'une des significations de $R^{13}$, est un radical linéaire comprenant de 1 à 14 atomes de carbone.

Selon une variante encore davantage préférée :

- au plus un des groupes pris parmi ($R^9$, $R^{10}$, $R^{11}$ et $R^{12}$) est un radical $C_1$-$C_8$ alkoxycarbonyle et tous les autres représentent un atome d'hydrogène ; et/ou
- $R^{13}$, représente un radical $-CH_2-$ ou un atome d'oxygène.

Le composé de formule (E) est notamment choisi parmi :

- le norbornène, de formule suivante :

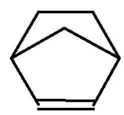

- le norbornadiène, de formule suivante:

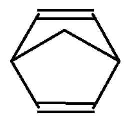

- le dicyclopentadiène, de formule suivante:

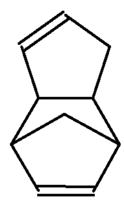

- le 7-oxanorbornène, de formule suivante:

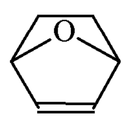

- le 7-oxanorbornadiène, de formule suivante:

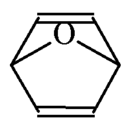

- le 5-éthylidène-2-norbornène, de formule suivante:

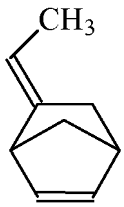

- ou encore, le 5-norbonene-2-methylacetate, de formule suivante:

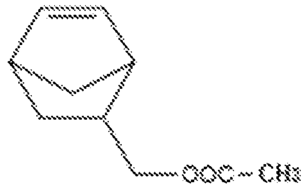

Le composé de formule (E) peut également être choisi parmi les composés de formules suivantes :

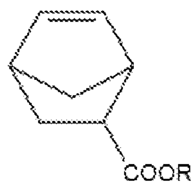
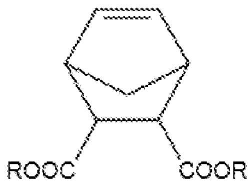
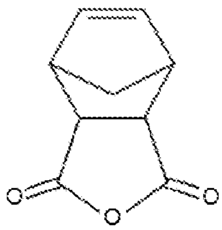
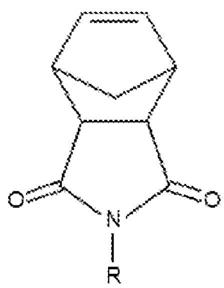

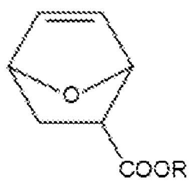
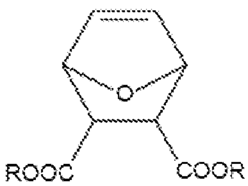
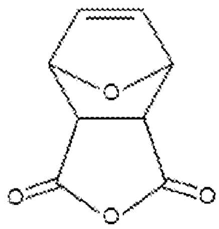
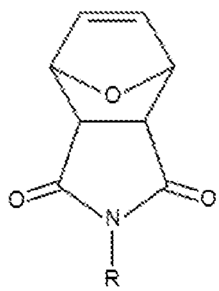

dans lesquelles R est tel que défini précédemment pour le composé de formule (D).

Le composé de formule (E) peut également être choisi dans le groupe formé par les produits d'addition (ou adducts en anglais) issus de la réaction de Diels-Alder utilisant le cyclopentadiène ou le furane comme produit de départ, ainsi que les composés dérivés du norbornène tels les norbornènes branchés tels que décrits dans WO 2001/04173 (tels que : carboxylate d'isobornyl norbornène, carboxylate de phényl norbornène, carboxylate d'éthylhéxyle norbornène, carboxylate de phénoxyéthyle norbornène et alkyl dicarboxymide norbornène, l'alkyl comportant le plus souvent de 3 à 8 atomes de carbone) et les norbornènes branchés tels que décrits dans WO 2011/038057 (anhydrides dicarboxyliques de norbornène et éventuellement anhydrides dicarboxyliques de 7-oxanorbornène).

Parmi les différents composés de formule (E) cités, sont tout particulièrement préférés le norbornène, le 7-oxanorbornène, le 5-norbornene-2-carboxylate de méthyle, de formule :

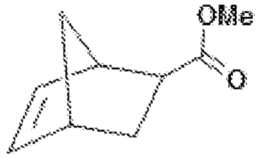

le 5-oxanorbornene-2-carboxylate de méthyle, de formule :

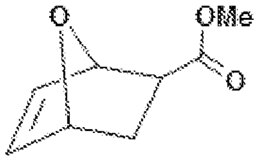

ou encore le dicyclopentadiène.

L'étape de polymérisation par ouverture de cycle par métathèse, comprise dans le procédé selon l'invention, est mise en œuvre le plus souvent en présence d'au moins un solvant, généralement choisi dans le groupe formé par les solvants aqueux ou organiques typiquement utilisés dans les réactions de polymérisation et qui sont inertes dans les conditions de la polymérisation sus-décrites.

A titre d'exemple de solvant pouvant être mis en œuvre, on peut citer les hydrocarbures aromatiques, les hydrocarbures chlorés, les éthers, les hydrocarbures aliphatiques, les alcools, l'eau ou leurs mélanges.

De préférence, le solvant est choisi dans le groupe formé par le benzène, le toluène, le para-xylène, le chlorure de méthylène, le dichloroéthane, le dichlorobenzène, le chlorobenzène, le tétrahydrofurane, le diéthyl éther, le pentane, l'hexane, l'heptane, le méthanol, l'éthanol, l'eau ou leurs mélanges.

Plus préférentiellement, le solvant est choisi dans le groupe formé par le benzène, le toluène, le para-xylène, le chlorure de méthylène, le dichloroéthane, le dichlorobenzène, le chlorobenzène, le tétrahydrofurane, le diéthyl éther, le pentane, l'hexane, l'heptane, le méthanol, l'éthanol, et leurs mélanges.

Mieux encore, le solvant est le toluène, l'heptane, ou un mélange de toluène et de chlorure de méthylène. La solubilité du polymère formé au cours de la réaction de polymérisation dépend généralement et principalement du choix du solvant et de la masse molaire du polymère obtenu. Il est aussi possible que la réaction soit mise en œ uvre sans solvant.

L'invention concerne également l'utilisation comme adhésif du polymère hydrocarboné comprenant deux groupements terminaux exo-vinylène cyclocarbonate, tel que défini précédemment, en mélange avec un composé aminé comprenant au moins deux groupements amine, par exemple choisi parmi les diamines, les triamines et homologues supérieurs.

Ledit polymère hydrocarboné réagit avec le composé aminé pour former un polyuréthane.

Les composés aminés utilisables selon l'invention sont de préférence tels que tous les groupements aminés, sont des groupements amines primaires. Ces composés aminés peuvent être des oligomères. Ces oligomères ont généralement une masse molaire moyenne en nombre inférieure à 2000 g/mol.

La température à laquelle le polymère à groupements terminaux exo-vinylène cyclocarbonate peut être mis en œuvre, comme adhésif, en mélange avec le composé aminé est une température inférieure à 100 °C, voire à température ambiante (c'est-à-dire environ 23 °C) lorsque ledit polymère est liquide à 23°C.

Il a été observé que dans des conditions de températures identiques, et en présence du même composé aminé, la réaction de formation du polyuréthane constitutif du joint adhésif est plus rapide que celle associée à la mise en œuvre comme adhésif du polymère hydrocarboné à terminaisons (2-oxo-1,3-dioxolan-4-yl) selon la demande WO 2014/091173.

Les quantités du polymère hydrocarboné et du composé aminé correspondent à des quantités stœchiométriques, c'est-à-dire que le rapport molaire du nombre de groupes exo-vinylène cyclocarbonate sur le nombre de groupes amines va de 0,8 à 1,2, de préférence de 0,9 à 1,1, voire est d'environ 1,0.

En pratique le polymère hydrocarboné et le composé aminé, utilisé comme durcisseur, sont avantageusement compris chacun dans un composant d'une composition bi-composants qui est mise à la disposition de l'utilisateur. Ce dernier procède ainsi, au moment de l'emploi de l'adhésif, au mélange de ces 2 composants, éventuellement à chaud, de manière à obtenir une composition adhésive liquide.

L'invention concerne encore un procédé d'assemblage de deux substrats par collage, comprenant :

- l'enduction sur au moins un des deux substrats à assembler d'une composition adhésive liquide obtenue par mélange d'un composé aminé comprenant au moins deux groupements amines avec le polymère hydrocarboné comprenant

deux groupements terminaux exo-vinylène cyclocarbonate tel que défini précédemment ; puis

- la mise en contact effective des deux substrats.

La composition adhésive liquide est soit la composition adhésive comprenant lesdits composés et polymère à l'état liquide à température ambiante, soit la composition adhésive fondue à chaud. L'homme du métier est à même de procéder de façon à ce que la composition adhésive utilisée soit sous forme liquide au moment de son utilisation.

L'enduction de la composition adhésive liquide est, de préférence, réalisée sous la forme d'une couche d'épaisseur comprise dans une fourchette de 0,3 à 5 mm, de préférence de 1 à 3 mm, sur au moins l'une des deux surfaces qui appartiennent respectivement aux deux substrats à assembler, et qui sont destinées à être mises en contact l'une avec l'autre selon une surface de tangence. La mise en contact effective des deux substrats est alors mise en œuvre selon leur surface de tangence.

Bien entendu, l'enduction et la mise en contact doivent être effectuées dans un intervalle de temps compatible, comme il est bien connu de l'homme du métier, c'est-à-dire avant que la couche d'adhésif appliquée sur le substrat ne perde sa capacité à fixer par collage ce substrat à un autre substrat. En général, la polycondensation du polymère hydrocarboné avec le composé aminé commence à se produire lors de l'enduction, puis continue à se produire lors de l'étape de mise en contact des deux substrats.

Les substrats appropriés sont, par exemple, des substrats inorganiques tels que le verre, les céramiques, le béton, les métaux ou les alliages (comme les alliages d'aluminium, l'acier, les métaux non-ferreux et les métaux galvanisés) ; ou bien des substrats organiques comme le bois, des plastiques comme le PVC, le polycarbonate, le PMMA, le polyéthylène, le polypropylène, les polyesters, les résines époxy ; les substrats en métal et les composites revêtus de peinture (comme dans le domaine automobile).

Les exemples suivants sont donnés à titre purement illustratif de l'invention, et ne sauraient être interprétés pour en limiter la portée.

**Exemple 1** : polymérisation du 1,5-cyclooctadiène (cyclooléfine de formule (C)) en présence de $CTA^1$:

On utilise du 1,5-cyclooctadiène (dénommé COD) disponible commercialement et comme agent de transfert de chaîne le $CTA^1$ de formule :

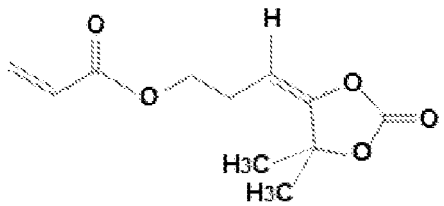

Le 1,5-cyclooctadiène (10,8 mmol), de la benzoquinone (0,54 mmol) et du $CH_2Cl_2$ sec (5 ml) sont introduits dans un ballon de 20 ml dans lequel a également été placé un barreau magnétique d'agitation revêtu de Téflon®. Le ballon et son contenu sont ensuite mis sous argon.

Le composé *CT*A$^1$ (0,54 mmol) est ensuite ajouté sous agitation dans le ballon par seringue. Le rapport des réactifs exprimé en nombre de moles : *CT*A$^1$/COD est de 0,050.

Le ballon est alors immergé dans un bain d'huile à 40°C, puis l'on procède immédiatement à l'ajout, par une canule, du catalyseur G2 défini précédemment (5,4 $\mu$mol) en solution dans du $CH_2Cl_2$ (2 ml).

Le mélange réactionnel devient très visqueux en l'espace de 2 minutes. La viscosité décroit ensuite lentement pendant les 10 minutes suivantes.

Au bout de 8 heures à compter de l'addition du catalyseur, le produit présent dans le ballon est extrait après évaporation du solvant sous vide. Le produit est alors récupéré sous la forme de poudre solide incolore, après précipitation dans le méthanol, filtration et séchage à 20 °C sous vide, avec un rendement supérieur à 90%.

Les analyses RMN $^1H$ ($CDCl_3$, 500 MHz, 25 °C) et $^{13}C$ ($CDCl_3$, 125 MHz, 25 °C) dudit polymère confirment la structure ci-dessous :

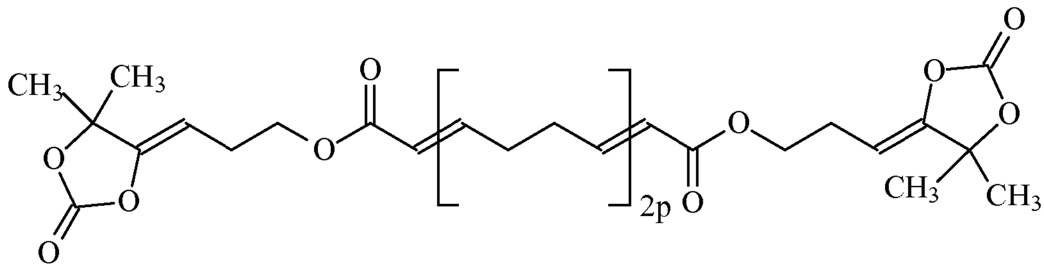

Cette structure est bien couverte par la formule (IV') définie précédemment.
La masse moléculaire moyenne en nombre Mn, mesurée par RMN est de 6800 g/mol.
L'indice de polymolécularité égal au rapport Mw/Mn (mesuré par chromatographie d'exclusion stérique avec étalon de polystyrène) est de 1,60.

__Exemple 2 :__ polymérisation du 1,5,9-cyclododécatriène (cyclooléfine de formule (C)) en présence de $CTA^2$ :

On répète l'exemple 1 en remplaçant :

- le COD par le 1,5,9-cyclododécatriène (dénommé CDT) qui est disponible commercialement, par exemple auprès de la société Sigma Aldrich ; et
- le $CTA^1$ par le $CTA^2$ de formule :

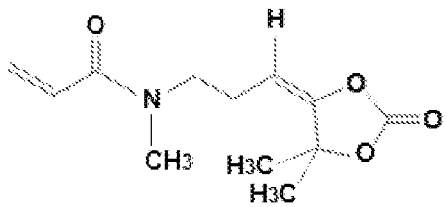

On récupère également un polymère sous la forme de poudre solide incolore dont l'analyse RMN $^1H/^{13}C$ confirme la structure ci-dessous :

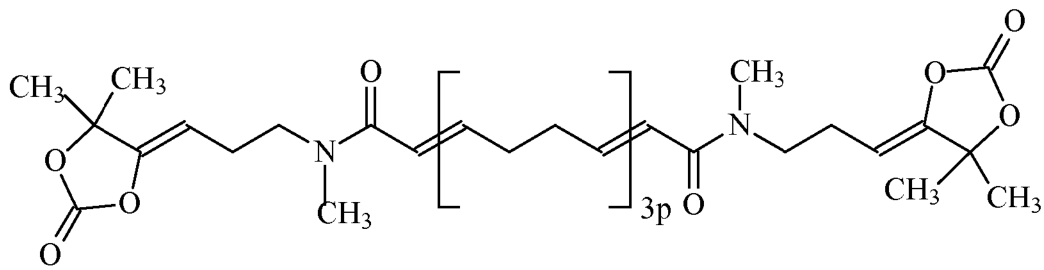

laquelle est donc également couverte par la formule (IV') définie précédemment.
La masse moléculaire moyenne en nombre Mn et l'indice de polydispersité sont, respectivement, de 6900 g/mol et de 1,80.

__Exemple 3 :__ polymérisation du 1,5,9-cyclododécatriène (cyclooléfine de formule (C)) en présence de $CTA^3$ :

On répète l'exemple 2 en remplaçant, comme agent de transfert de chaîne, le $CTA^2$ par le $CTA^3$ de formule :

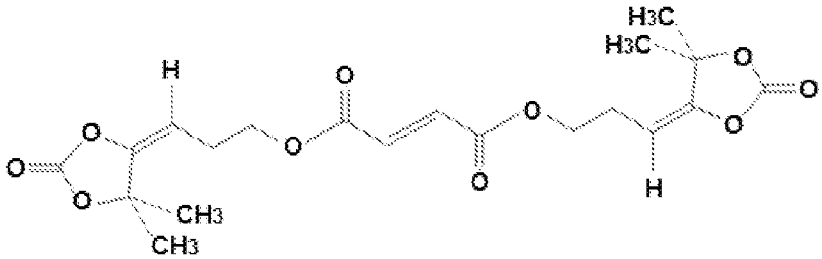

et à raison de 0,27 mmol de $CTA^3$.

Le rapport des réactifs exprimé en nombre de moles : $CTA^3$/CDT est de 0,025.

On récupère également un polymère sous la forme de poudre solide incolore dont l'analyse RMN $^1H/^{13}C$ confirme la structure ci-dessous :

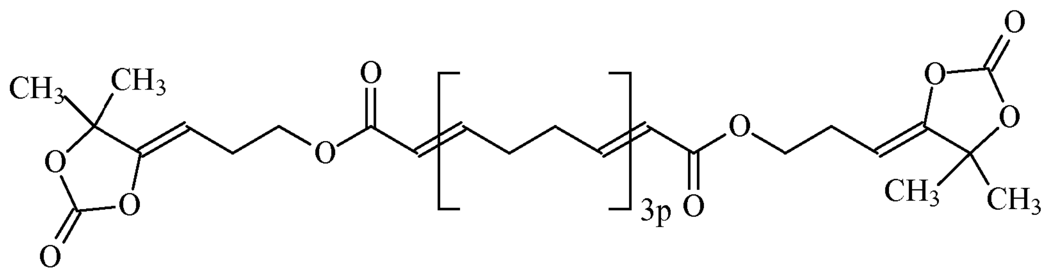

Cette structure est bien couverte par la formule (IV') définie précédemment.

La masse moléculaire moyenne en nombre Mn et l'indice de polydispersité sont, respectivement, de 6900 g/mol et de 1,80.

<u>**Exemple 4**</u> : polymérisation du 1,5,9-cyclododécatriène (cyclooléfine de formule (C)) en présence de $CTA^4$ :

On répète l'exemple 3 en remplaçant, comme agent de transfert de chaîne, le $CTA^3$ par le $CTA^4$ de formule :

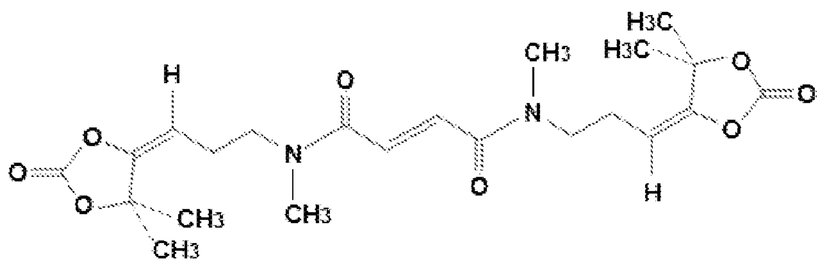

On récupère également un polymère sous la forme de poudre solide incolore dont l'analyse RMN $^1H/^{13}C$ confirme une structure identique à celle obtenue pour l'exemple 2.

<u>**Exemple 5 :**</u> polymérisation du CDT et du norbornène (cyclooléfine de formule (E)) en présence de $CTA^3$ :

On répète l'exemple 3 en remplaçant les 10,8 mmol de CDT par un mélange de 5,4 mmol de CDT et de 5,4 mmol de norbornène, de formule :

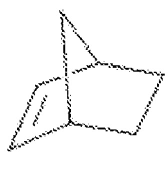

et disponible auprès de la société Sigma Aldrich.

Le rapport des réactifs exprimé en nombre de moles : $CTA^3$/(CDT + norbornène) est de 0,025.

On obtient un copolymère liquide dont l'analyse RMN ($^1H$ NMR et $^{13}C$ NMR) confirme la structure ci-dessous :

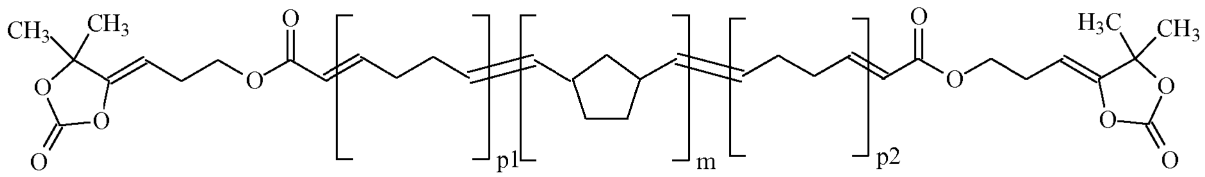

Cette structure est bien couverte par la formule (III') définie précédemment.

La masse moléculaire moyenne en nombre Mn et l'indice de polydispersité sont, respectivement, de 5500 g/mol et de 1,60.

**Exemple 6 :** polymérisation du CDT et du 5-norbornene-2-carboxylate de méthyle (cyclooléfine de formule (E)) en présence de $CTA^3$ :

On répète l'exemple 5 en remplaçant le norbornène par le 5-norbornene-2-carboxylate de méthyle, de formule :

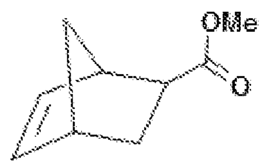

et disponible auprès de la société Sigma Aldrich.

On obtient également un copolymère liquide à température ambiante, dont l'analyse par RMN confirme la structure ci-dessous :

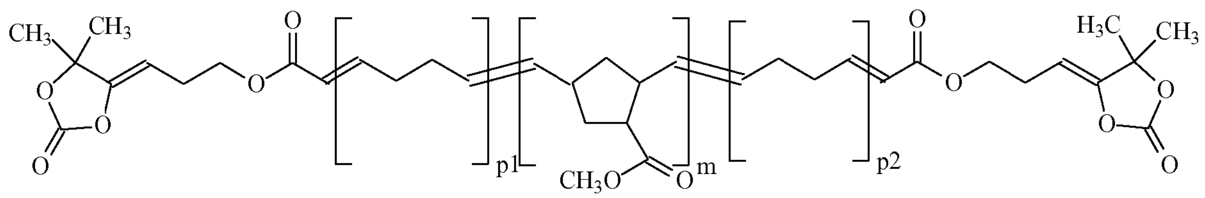

Cette structure est bien couverte par la formule (III') définie précédemment.

La masse moléculaire moyenne en nombre Mn et l'indice de polydispersité sont, respectivement, de 6600 g/mol et de 1,70.

**Exemple 7 :** polymérisation du CDT et du 5-oxanorbornene-2-carboxylate de méthyle (cyclooléfine de formule (E)) en présence de $CTA^3$:

On répète l'exemple 5 en remplaçant le norbornène par le 5-oxanorbornene-2-carboxylate de méthyle, de formule :

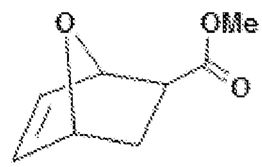

et disponible auprès de la société Boc Sciences.

On obtient également un copolymère liquide à température ambiante, dont l'analyse par RMN confirme la structure :

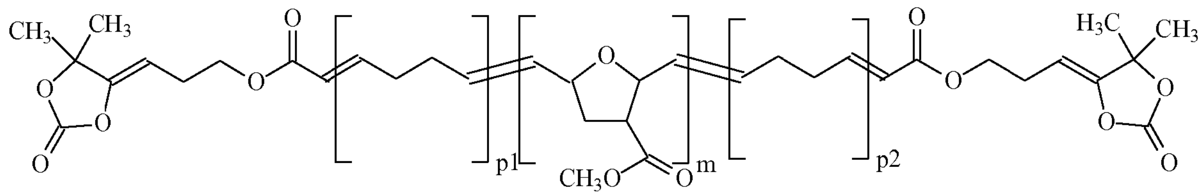

qui est bien couverte par la formule (III') définie précédemment.

La masse moléculaire moyenne en nombre Mn et l'indice de polydispersité sont, respectivement, de 6500 g/mol et de 1,70.

**Exemple 8 :** polymérisation du CDT et du dicyclopentadiène (cyclooléfine de formule (E)) en présence de $CTA^3$:

On répète l'exemple 5 en remplaçant le norbornène par le dicyclopentadiène, de formule :

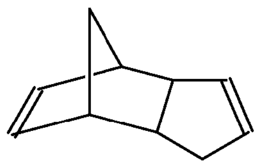

et disponible auprès de la société Sigma Aldrich.

On obtient également un copolymère liquide à température ambiante, dont l'analyse par RMN confirme la structure ci-dessous :

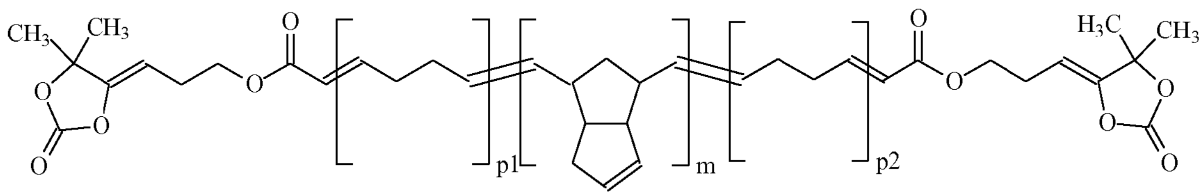

qui est bien couverte par la formule (III') définie précédemment.

La masse moléculaire moyenne en nombre Mn et l'indice de polydispersité sont, respectivement, de 6800 g/mol et de 1,80.

**Exemple 9** : polymérisation du CDT et du 5-n-hexyl-cyclooctène (cyclooléfine de formule (D)) en présence de $CTA^3$:

Le 5-n-hexyl-cyclooctène utilisé dans cet exemple a été synthétisé selon la voie indiquée dans le schéma réactionnel ci-dessous (cf composé n° 5) :

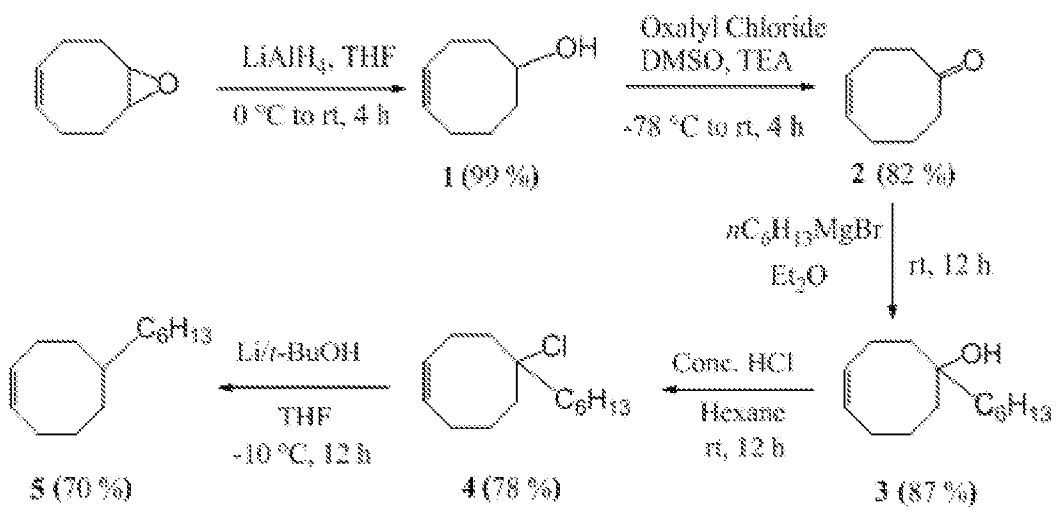


Les matières premières (notamment le 5,6-époxycyclooctène), réactifs et solvants utilisés lors de ces synthèses sont des produits commerciaux de la société Sigma Aldrich. Il est fait référence pour plus amples précisions à la publication de A. Diallo et al. (Polymer Chemistry, Vol. 5, Issue 7, 7 April 2014, pp 2583-2591), ou encore à la référence Kobayashi et al J. Am. Chem. Soc. 2011, 133, pp 5794-5797).

On répète l'exemple 5 en remplaçant le norbornène par le 5-n-hexyl-cyclooctène.

On obtient également un copolymère liquide à température ambiante, dont l'analyse par RMN confirme la structure ci-dessous :

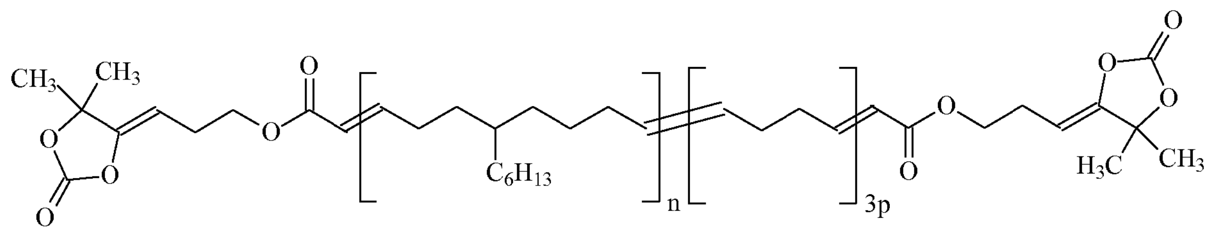

qui est bien couverte par la formule (II') définie précédemment.

La masse moléculaire moyenne en nombre Mn et l'indice de polydispersité sont, respectivement, de 7000 g/mol et de 1,80.

__Exemple 10 :__ polymérisation du CDT, du cyclooctène (cyclooléfine de formule (D)), et du norbornène (cyclooléfine de formule (E)) en présence de $CTA^3$:

On répète l'exemple 3 en remplaçant les 10,8 mmol de CDT par un mélange de 3,6 mmol de CDT, 3,6 mmol de cyclooctène et 3,6 mmol de norbornène.

Le rapport des réactifs exprimé en nombre de moles : $CTA^3$/(CDT + cyclooctène + norbornène) est de 0,025.

Au bout de 8 h à compter de l'addition du catalyseur, le produit présent dans le ballon est extrait après évaporation du solvant sous vide. Le produit est alors récupéré sous la forme d'un liquide à température ambiante, après précipitation dans le méthanol, filtration et séchage à 20 °C sous vide, avec un rendement supérieur à 90%.

L'analyse RMN du polymère obtenu confirment la structure ci-dessous :

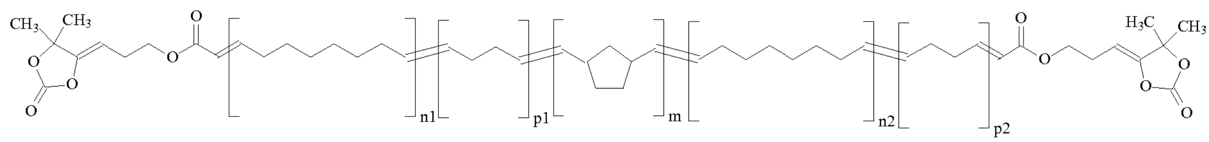

La masse moléculaire moyenne en nombre Mn et l'indice de polydispersité sont, respectivement, de 6900 g/mol et de 1,70.

**Exemple 11 :** synthèse d'un polyuréthane par réaction du polymère de l'exemple 1 avec une diamine à 80 °C :

Il est mis en réaction à 80°C, et dans un rapport stœchiométrique, un mélange de la polyoléfine de l'exemple 1 (solide à température ambiante) avec une diamine primaire de type polyéther diamine (JEFFAMINE EDR 176, Huntsman) et ce pendant une durée correspondant à la disparition complète de la bande infrarouge caractéristique des groupements 1,3-dioxolan-2-one (à 1800 $cm^{-1}$), et à l'apparition des bandes caractéristiques de la liaison carbamate (bande à 1700 $cm^{-1}$ en InfraRouge).

Cette durée de réaction est inférieure à 3 h.

**Exemple 12** : synthèse d'un polyuréthane par réaction du polymère de l'exemple 5 avec une diamine à 80 °C :

On répète l'exemple 11 avec la polyoléfine de l'exemple 5 (sous forme de liquide visqueux) en procédant à la réaction du mélange à 80° C.
La durée de réaction est inférieure à 3 h.

**Exemple 13** : synthèse d'un polyuréthane par réaction du polymère de l'exemple 9 avec une diamine à 60 °C :

On répète l'exemple 12 avec la polyoléfine de l'exemple 9 (sous forme de liquide visqueux) en procédant à la réaction du mélange à 60° C.
La durée de réaction est inférieure à 3 h.

**Revendications**

1. Polymère hydrocarboné comprenant deux groupements terminaux exo-vinylène cyclocarbonate, ledit polymère hydrocarboné ayant la formule (I) :

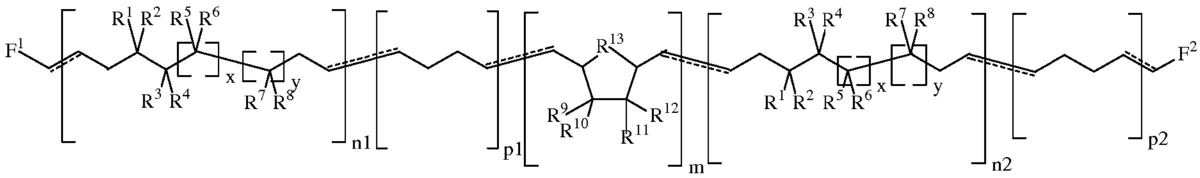

(I)

dans laquelle :

- $F^1$ et $F^2$ sont les radicaux monovalents exo-vinylène cyclocarbonate, de formules respectives (IIa) et (IIb) :

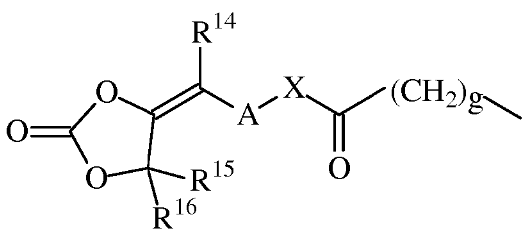

(IIa)

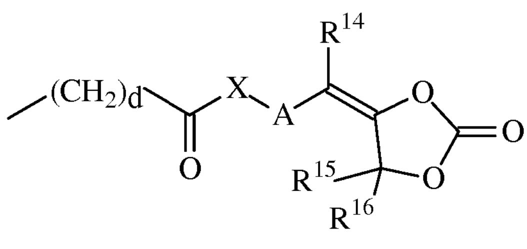

(IIb)

dans lesquelles :

- g et d, identiques ou différents, représentent un nombre entier égal à 0, 1, 2 ou 3 ;
- A représente un radical divalent C1-C6 alkylène ;
- X est un atome d'oxygène ou un groupe azoté $NR^{17}$ où $R^{17}$ est un groupe alkyle en C1-C6 ;
- $R^{14}$, $R^{15}$ et $R^{16}$, identiques ou différents, représentent chacun un atome d'hydrogène, un groupe alkyle

en C1-C6, un groupe cycloalkyle en C5-C6, un groupe phényle ou un groupe alkylphényle avec une chaîne alkyle en C1-C4 ;

- chaque liaison carbone - carbone de la chaîne principale du polymère, notéereprésente une double liaison ou une simple liaison, conformément aux règles de valence de la chimie organique ;
- $R^1$, $R^2$, $R^3$, $R^4$, $R^5$, $R^6$, $R^7$ et $R^8$, identiques ou différents, représentent :

  - un atome d'hydrogène ou d'halogène ; ou
  - un radical comprenant de 1 à 22 atomes de carbone choisi parmi alkyle, alcényle, alcoxycarbonyle, alcényloxycarbonyle, alkylcarbonyloxy, alcénylcarbonyloxy, la chaîne hydrocarbonée dudit radical pouvant éventuellement être interrompue par au moins un atome d'oxygène ou un atome de soufre ; en outre:
  - au moins un des groupes $R^1$ à $R^8$ peut former, avec au moins un autre des groupes $R^1$ à $R^8$ et avec le ou les atomes de carbone auxquels lesdits groupes sont reliés, un cycle ou hétérocycle hydrocarboné saturé ou insaturé, éventuellement substitué, et comprenant de 3 à 10 chaînons; et
  - au moins une des paires ($R^1$, $R^2$), ($R^3$, $R^4$), ($R^5$, $R^6$) et ($R^7$, $R^8$) peut former, avec l'atome de carbone auquel ladite paire est reliée, un groupe carbonyle C=O ou un groupe de 2 atomes de carbone reliés par une double liaison : C=C, dont l'autre atome de carbone porte 2 substituants choisis parmi un atome d'hydrogène ou un radical $C_1$-$C_4$ alkyle ;

- x et y sont des nombres entiers, identiques ou différents, compris dans une fourchette allant de 0 à 6, la somme x + y étant comprise dans une fourchette allant de 0 à 6 ;
- $R^9$, $R^{10}$, $R^{11}$ et $R^{12}$, identiques ou différents, représentent :

  - un atome d'hydrogène ou d'halogène ; ou
  - un radical comprenant de 1 à 22 atomes de carbone et choisi parmi alkyle, alcényle, alcoxycarbonyle, alcényloxycarbonyle, alkylcarbonyloxy, alcénylcarbonyloxy, alkylcarbonyloxyalkyl, la chaîne hydrocarbonée dudit radical pouvant éventuellement être interrompue par au moins un atome d'oxygène ou un atome de soufre ; en outre:
  - au moins un des groupes $R^9$ à $R^{12}$ peut former, avec au moins un autre des groupes $R^9$ à $R^{12}$ et avec le ou les atomes de carbone auxquels lesdits groupes sont reliés, un cycle ou hétérocycle hydrocarboné saturé ou insaturé, éventuellement substitué, et comprenant de 3 à 10 chaînons; et
  - au moins une des paires ($R^9$, $R^{10}$) et ($R^{11}$, $R^{12}$) peut former avec l'atome de carbone auquel ladite paire est reliée un groupe de 2 atomes de carbone reliés par une double liaison : C=C, dont l'autre atome de carbone porte 2 substituants choisis parmi un atome d'hydrogène ou un radical $C_1$-$C_4$ alkyle ; et
  - l'atome de carbone porteur de l'un des groupes de la paire ($R^9$, $R^{10}$) peut être relié à l'atome de carbone porteur de l'un des groupes de la paire ($R^{11}$, $R^{12}$) par une double liaison, étant entendu que, conformément aux règles de valence, un seul des groupes de chacune de ces 2 paires est alors présent ;

- $R^{13}$ représente :

  - un atome d'oxygène ou de soufre, ou
  - un radical divalent $-CH_2-$, -C(=O)- ou $-NR^0-$ dans lequel $R^0$ est un radical alkyle ou alcényle comprenant de 1 à 22 atomes de carbone ;

- n1 et n2, identiques ou différents, sont chacun un nombre entier ou nul dont la somme est désignée par n ;
- m est un nombre entier supérieur ou égal à 0 ;
- p1 et p2, identiques ou différents, sont chacun un nombre entier ou nul dont la somme p1 + p2 est non nulle et vérifie l'équation : p1 + p2 = q x (z + 1) dans laquelle :

  - q est un nombre entier supérieur à 0 ; et
  - z est un nombre entier allant de 1 à 5 ; et

- n1, n2, m, p1 et p2 étant en outre tels que la masse moléculaire moyenne en nombre Mn du polymère de formule (I) est comprise dans une fourchette allant de 400 à 100 000 g/mol et son indice de polymolécularité est compris dans un domaine allant de 1,0 à 3,0 ; lesdits Mn et indice de polymolécularité étant mesurés par chromatographie d'exclusion stérique avec mise en œuvre d'un étalonnage PolyStyrène.

**2.** Polymère hydrocarboné selon la revendication 1, **caractérisé en ce que** :

- g ou d sont égaux à 0 ;
- A représente un radical divalent C1-C3 alkylène ;
- X est l'atome d'oxygène ou un groupe azoté $NR^{17}$ où $R^{17}$ est un groupe alkyle en C1-C3 ;
- $R^{14}$ est un atome d'hydrogène ;
- $R^{15}$ et $R^{16}$, identiques ou différents, représentent chacun un groupe alkyle en C1-C3 ;
- z est un nombre entier égal à 1 ou 2 ; et/ou
- la masse moléculaire moyenne en nombre Mn est comprise dans une fourchette allant de 1000 à 50 000 g/mol, et l'indice de polymolécularité est compris dans un domaine allant de 1,4 à 2,0.

**3.** Polymère hydrocarboné selon l'une des revendications 1 ou 2, **caractérisé en ce que** sa chaîne principale comprend le motif de répétition répété n1+n2 fois et le motif de répétition répété m fois.

**4.** Polymère hydrocarboné selon la revendication 3, **caractérisé en ce que** :

- $R^1$, $R^2$, $R^3$, $R^4$, $R^5$, $R^6$, $R^7$ et $R^8$ représentent un atome d'hydrogène ou un radical alkyle comprenant de 1 à 14 atomes de carbone ;
- les nombres entiers x et y sont compris dans une fourchette allant de 0 à 2, la somme x + y étant comprise dans une fourchette allant de de 0 à 2 ; et/ou
- $R^9$, $R^{10}$, $R^{11}$ et $R^{12}$ représentent un atome d'hydrogène ou un radical dont la partie hydrocarbonée comprend de 1 à 14 atomes de carbone.

**5.** Polymère hydrocarboné selon l'une des revendications 1 ou 2, **caractérisé en ce que** :

- lorsque m est non nul et que n1 et n2 sont chacun égal à 0, alors le rapport : m / (p1 +p2 + m) est compris dans l'intervalle allant de 30 à 70 % ; ou
- lorsque m est égal à 0 et que la somme n1 + n2 est non nulle, alors au moins un des groupes $R^1$, $R^2$, $R^3$, $R^4$, $R^5$, $R^6$, $R^7$ et $R^8$ est autre qu'un atome d'hydrogène, et le rapport : (n1 + n2) / (p1 + p2 + n1 + n2) est compris dans l'intervalle allant de 30 à 70 % ; ou
- lorsque m est non nul, que la somme n1 + n2 est non nulle et que chacun des groupes $R^1$, $R^2$, $R^3$, $R^4$, $R^5$, $R^6$, $R^7$ et $R^8$ est un atome d'hydrogène, alors le rapport : m/(p1 + p2 + n1 + n2 + m) est compris dans l'intervalle allant de 30 à 70 % ;
- lorsque m est non nul, que la somme n1 + n2 est non nulle et que au moins un des groupes $R^1$, $R^2$, $R^3$, $R^4$, $R^5$, $R^6$, $R^7$ et $R^8$ est autre qu'un atome d'hydrogène, alors le rapport : (m + n1 + n2)/(p1 + p2 + n1 + n2 + m) est compris dans l'intervalle allant de 30 à 70 %.

**6.** Polymère hydrocarboné selon l'une des revendications 1 à 3, **caractérisé en ce qu'**il a la formule (I') suivante :

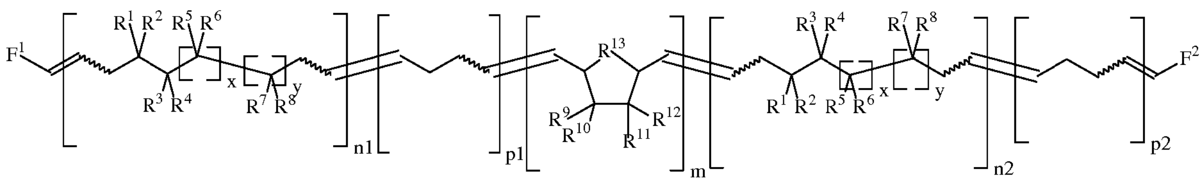

(I')

**7.** Polymère hydrocarboné selon l'une des revendications 1 à 2, **caractérisé en ce qu'**il a la formule (II) suivante :

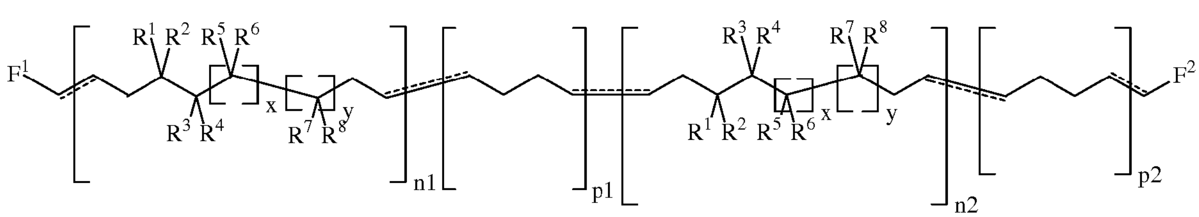

(II)

8. Polymère hydrocarboné selon la revendication 7, **caractérisé en ce qu'**il a la formule (II') suivante :

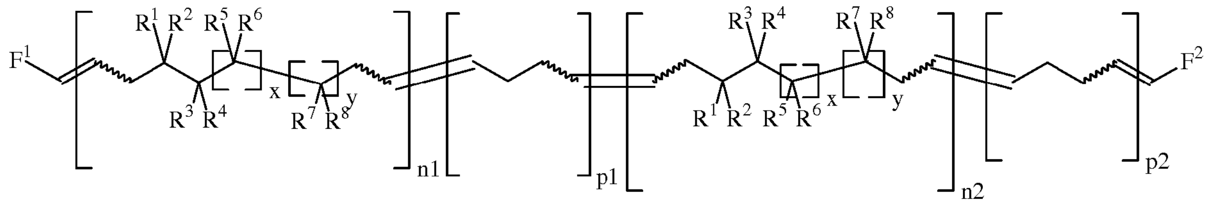

(II')

9. Polymère hydrocarboné selon l'une des revendications 1 à 2, **caractérisé en ce que** n1 et n2 sont chacun égal à 0, le polymère étant de formule (III) suivante :

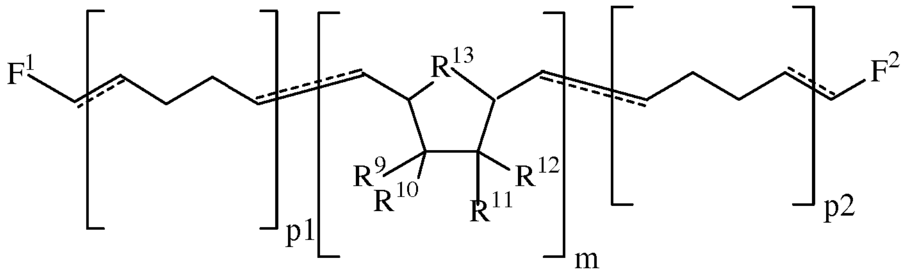

(III)

10. Polymère hydrocarboné selon la revendication 9, **caractérisé en ce qu'**il a la formule (III') suivante :

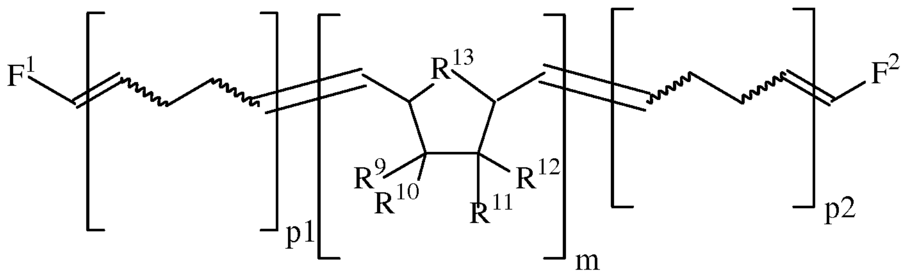

(III')

11. Polymère hydrocarboné selon l'une des revendications 1 à 2, **caractérisé en ce que** n1, n2 et m sont chacun égal à 0, le polymère étant de formule (IV) suivante:

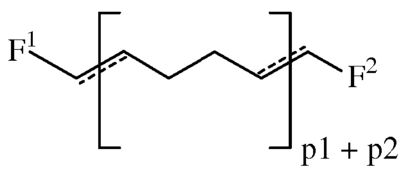

(IV)

12. Polymère hydrocarboné selon la revendication 11, **caractérisé en ce qu'**il a la formule (IV') suivante :

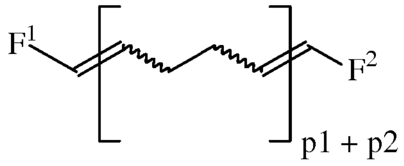

(IV')

**13.** Procédé de préparation d'un polymère hydrocarboné tel que défini dans l'une des revendications 1 à 12, ledit procédé comprenant une étape de polymérisation par ouverture de cycle par métathèse, en présence :

(a) d'un catalyseur de métathèse de type ruthénium carbène de Grubbs de 2ème génération ;
(b) d'un agent de transfert de chaîne choisi parmi un mono ou di-exo vinylène cyclocarbonate de formule respective (B1) ou (B2):

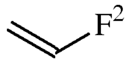

(B1)

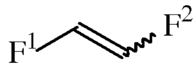

(B2)

étant entendu que dans les formules ci-dessus :

- la liaison  est une liaison simple carbone-carbone orientée géométriquement d'un côté ou de l'autre par rapport à la double liaison ;

(c) d'un composé de formule (C) :

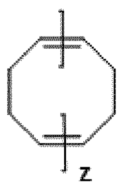

(C)

(d) éventuellement d'un composé de formule (D) :

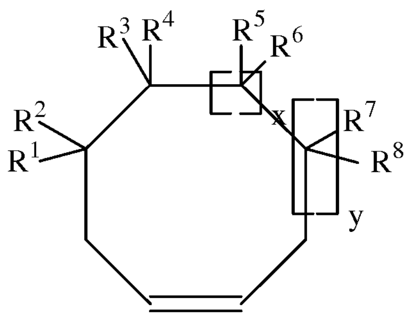

(D)

et
(e) éventuellement d'un composé de formule (E) :

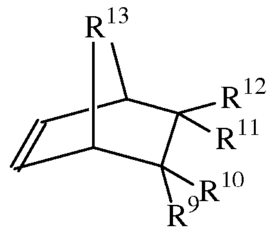

(E)

ladite étape de polymérisation étant en outre mise en œuvre :

- pendant une durée allant de 2 à 24 heures et à une température comprise dans un intervalle de 20 à 60 °C ; et
- avec un rapport r égal au rapport du nombre de moles dudit CTA :

  - au nombre de moles du composé de formule (C), si celui-ci est le seul réactif autre que le CTA mis en œuvre dans la réaction, ou
  - à la somme du nombre de moles du composé de formule (C) et du nombre de moles des composés de formule (D) et/ou (E), si les composés de formule (D) et/ou (E) sont également mis en œuvre dans la réaction,

compris dans un intervalle allant de 0,0010 à 1,0.

**14.** Utilisation comme adhésif du polymère hydrocarboné tel que défini dans l'une des revendications 1 à 12, en mélange avec un composé aminé comprenant au moins deux groupements amine.

**15.** Procédé d'assemblage de deux substrats par collage, comprenant :

- l'enduction sur au moins un des deux substrats à assembler d'une composition adhésive liquide obtenue par mélange d'un composé aminé comprenant au moins deux groupements amines avec le polymère hydrocarboné tel que défini dans l'une des revendications 1 à 12 ; puis
- la mise en contact effective des deux substrats.

## Patentansprüche

**1.** Kohlenwasserstoffpolymer mit zwei exo-Vinylencyclocarbonat-Endgruppen, wobei das Kohlenwasserstoffpolymer die folgende Formel (I) hat:

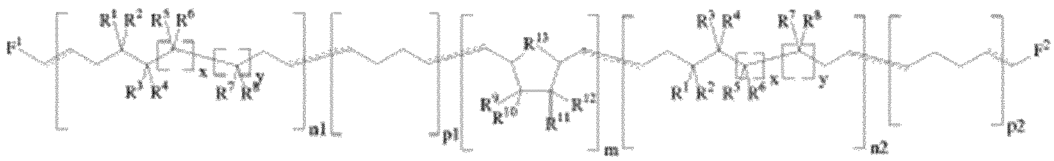

(I)

in der:

- $F^1$ und $F^2$ die einwertigen exo-Vinylencyclocarbonat-Reste mit den jeweiligen Formeln (IIa) und (IIb) sind:

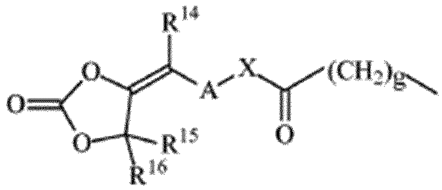
(IIa)

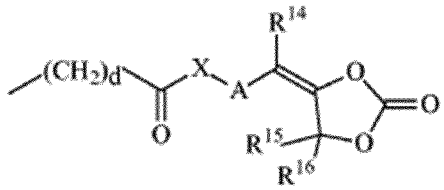
(IIb)

in denen:

- g und d, gleich oder verschieden, eine ganze Zahl gleich 0, 1, 2 oder 3 darstellen;
- A einen zweiwertigen C1-C6-Alkylenrest darstellt;
- X ein Sauerstoffatom oder eine Stickstoffgruppe $NR^{17}$ ist, wobei $R^{17}$ eine C1-C6-Alkylgruppe ist;
- $R^{14}$, $R^{15}$ und $R^{16}$, gleich oder verschieden, jeweils ein Wasserstoffatom, eine C1-C6-Alkylgruppe, eine C5-C6-Cycloalkylgrupe, eine Phenylgruppe oder eine Alkylphenylgruppe mit einer C1-C4-Alkylkette darstellen;

- jede Kohlenstoff-Kohlenstoff-Bindung der Hauptkette des Polymers, notiert als ------ , eine Doppelbindung oder eine Einfachbindung gemäß den Valenzregeln der organischen Chemie darstellt;
- $R^1$, $R^2$, $R^3$, $R^4$, $R^5$, $R^6$, $R^7$ und $R^8$, gleich oder verschieden, darstellen:

  - ein Wasserstoff- oder Halogenatom; oder
  - einen Rest mit 1 bis 22 Kohlenstoffatomen, der ausgewählt ist unter Alkyl, Alkenyl, Alkoxycarbonyl, Alkenyloxycarbonyl, Alkylcarbonyloxy, Alkenylcarbonyloxy, wobei die Kohlenwasserstoffkette des Rests gegebenenfalls durch mindestens ein Sauerstoffatom oder ein Schwefelatom unterbrochen sein kann; ferner
  - mindestens eine der Gruppen $R^1$ bis $R^8$ mit mindestens einer anderen der Gruppen $R^1$ bis $R^8$ und mit dem oder den Kohlenstoffatomen, mit denen die Gruppen verbunden sind, einen gesättigten oder ungesättigten, gegebenenfalls substituierten Kohlenwasserstoffcyclus oder -heterocyclus mit 3 bis 10 Gliedern bilden kann; und
  - mindestens eines der Paare ($R^1$, $R^2$), ($R^3$, $R^4$), ($R^5$, $R^6$) und ($R^7$, $R^8$) mit dem Kohlenstoffatom, mit dem das Paar verbunden ist, eine C=O-Carbonylgruppe oder eine Gruppe aus 2 Kohlenstoffatomen, die durch eine Doppelbindung C=C verbunden sind, wobei das andere Kohlenstoffatom 2 Substituenten trägt, die unter einem Wasserstoffatom oder einem $C_1$-$C_4$-Alkylrest ausgewählt sind, bilden kann,;

- x und y gleiche oder verschiedene ganze Zahlen sind, die in einem Bereich von 0 bis 6 liegen, wobei die Summe x + y in einem Bereich von 0 bis 6 liegt;
- $R^9$, $R^{10}$, $R^{11}$ und $R^{12}$, gleich oder verschieden, darstellen:

  - ein Wasserstoff- oder Halogenatom; oder
  - einen Rest, der 1 bis 22 Kohlenstoffatome umfasst und ausgewählt ist unter Alkyl, Alkenyl, Alkoxycarbonyl, Alkenyloxycarbonyl, Alkylcarbonyloxy, Alkenylcarbonyloxy, Alkylcarbonyloxyalkyl, wobei die Kohlenwasserstoffkette des Rests gegebenenfalls durch mindestens ein Sauerstoffatom oder ein Schwefelatom unterbrochen sein kann; ferner
  - mindestens eine der Gruppen $R^9$ bis $R^{12}$ mit mindestens einer anderen der Gruppen $R^9$ bis $R^{12}$ und mit dem oder den Kohlenstoffatomen, mit denen die Gruppen verbunden sind, einen gesättigten oder ungesättigten, gegebenenfalls substituierten Kohlenwasserstoffcyclus oder -heterocyclus mit 3 bis 10 Gliedern bilden kann; und
  - mindestens eines der Paare ($R^9$, $R^{10}$), ($R^{11}$, $R^{12}$) mit dem Kohlenstoffatom, mit dem das Paar verbunden ist, eine Gruppe aus 2 Kohlenstoffatomen, die durch eine Doppelbindung C=C verbunden sind, wobei das andere Kohlenstoffatom 2 Substituenten trägt, die unter einem Wasserstoffatom oder einem $C_1$-$C_4$-Alkylrest ausgewählt sind, bilden kann; und
  - das Kohlenstoffatom, das eine der Gruppen des Paars ($R^9$, $R^{10}$) trägt, mit dem Kohlenstoffatom, das eine der Gruppen des Paars ($R^{11}$, $R^{12}$) trägt, durch eine Doppelbindung verbunden sein kann, wobei es sich versteht, dass dann gemäß den Valenzregeln eine einzige der Gruppen jedes dieser 2 Paare vorhanden ist;

- $R^{13}$ darstellt:

- ein Sauerstoff- oder Schwefelatom oder
- einen zweiwertigen Rest $-CH_2-$, -C(=O)- oder $-NR^0-$, wobei $R^0$ ein Alkyl- oder Alkenylrest mit 1 bis 22 Kohlenstoffatomen ist;

- n1 und n2, gleich oder verschieden, jeweils eine ganze Zahl oder Null sind, deren Summe mit n bezeichnet ist;
- m eine ganze Zahl größer oder gleich 0 ist;
- p1 und p2, gleich oder verschieden, jeweils eine ganze Zahl oder Null sind, deren Summe p1 + p2 ungleich Null ist und die Gleichung: p1 + p2 = q x (z + 1) erfüllt,
in der:

    - q eine ganze Zahl größer 0 ist; und
    - z eine ganze Zahl von 1 bis 5 ist; und

- n1, n2, m, p1 und p2 ferner dergestalt sind, dass die zahlenmittlere Molmasse Mn des Polymers der Formel (I) in einem Bereich von 400 bis 100.000 g/mol liegt und sein Polymolekularitätsindex in einem Bereich von 1,0 bis 3,0 liegt; wobei das Mn und der Polymolekularitätsindex durch Größenausschlusschromatographie mit Durchführung einer Polystyrolkalibrierung gemessen werden.

**2.** Kohlenwasserstoffpolymer nach Anspruch 1, **dadurch gekennzeichnet, dass**:

- g oder d gleich 0 sind;
- A einen zweiwertigen C1-C3-Alkylenrest darstellt;
- X das Sauerstoffatom oder eine Stickstoffgruppe $NR^{17}$ ist, worin $R^{17}$ eine C1-C3-Alkylgruppe ist;
- $R^{14}$ ein Wasserstoffatom ist;
- $R^{15}$ und $R^{16}$, gleich oder verschieden, jeweils eine C1-C3-Alkylgruppe darstellen;
- z eine ganze Zahl gleich 1 oder 2 ist; und/oder
- die zahlenmittlere Molmasse Mn in einem Bereich von 1000 bis 50.000 g/mol liegt ist und der Polymolekularitätsindex in einem Bereich von 1,4 bis 2,0 liegt.

**3.** Kohlenwasserstoffpolymer nach einem der Ansprüche 1 und 2, **dadurch gekennzeichnet, dass** seine Hauptkette die n1+n2-mal wiederholte Wiederholungseinheit und die m-mal wiederholte Wiederholungseinheit umfasst.

**4.** Kohlenwasserstoffpolymer nach Anspruch 3, **dadurch gekennzeichnet, dass**:

- $R^1$, $R^2$, $R^3$, $R^4$, $R^5$, $R^6$, $R^7$ und $R^8$ ein Wasserstoffatom oder einen Alkylrest mit 1 bis 14 Kohlenstoffatomen darstellen;
- die ganzen Zahlen x und y in einem Bereich von 0 bis 2 liegen, wobei die Summe x + y in einem Bereich von 0 bis 2 liegt;
- $R^9$, $R^{10}$, $R^{11}$ und $R^{12}$ ein Wasserstoffatom oder einen Rest, dessen Kohlenwasserstoffteil 1 bis 14 Kohlenstoffatome umfasst, darstellen.

**5.** Kohlenwasserstoffpolymer nach einem der Ansprüche 1 und 2, **dadurch gekennzeichnet, dass**:

- wenn m ungleich Null ist und n1 und n2 jeweils gleich 0 sind, das Verhältnis: m / (p1 + p2 + m) in dem Intervall von 30 bis 70 % liegt; oder
- wenn m gleich 0 ist und die Summe n1 + n2 ungleich Null ist, mindestens eine der Gruppen $R^1$, $R^2$, $R^3$, $R^4$, $R^5$, $R^6$, $R^7$ und $R^8$ kein Wasserstoffatom ist und das Verhältnis: (n1 + n2) / (p1 + p2 + n1 + n2) in dem Intervall von 30 bis 70 % liegt; oder
- wenn m ungleich Null ist, die Summe n1 + n2 ungleich Null ist und jede der Gruppen $R^1$, $R^2$, $R^3$, $R^4$, $R^5$, $R^6$, $R^7$ und $R^8$ ein Wasserstoffatom ist, das Verhältnis: m / (p1 + p2 + n1 + n2 + m) in dem Intervall von 30 bis 70 % liegt;
- wenn m ungleich Null ist, die Summe n1 + n2 ungleich Null ist und mindestens eine der Gruppen $R^1$, $R^2$, $R^3$, $R^4$, $R^5$, $R^6$, $R^7$ und $R^8$ kein Wasserstoffatom ist, das Verhältnis: (m + n1 + n2) / (p1 + p2 + n1 + n2 + m) in dem Intervall von 30 bis 70 % liegt.

**6.** Kohlenwasserstoffpolymer nach einem der Ansprüche 1 bis 3, **dadurch gekennzeichnet, dass** es die folgende Formel (I') hat:

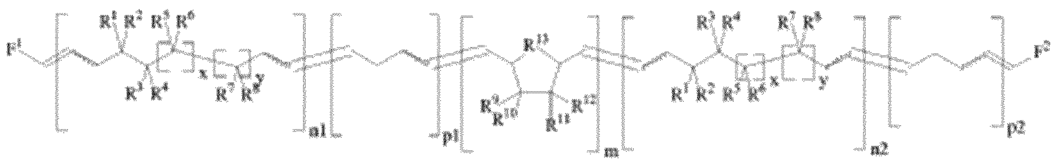

(I')

7. Kohlenwasserstoffpolymer nach einem der Ansprüche 1 bis 2, **dadurch gekennzeichnet, dass** es die folgende Formel (II) hat:

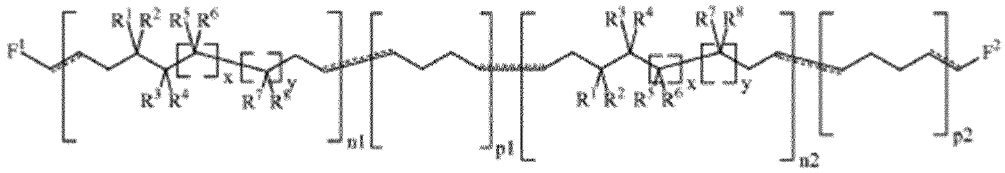

(II)

8. Kohlenwasserstoffpolymer nach Anspruch 7, **dadurch gekennzeichnet, dass** es die folgende Formel (II') hat:

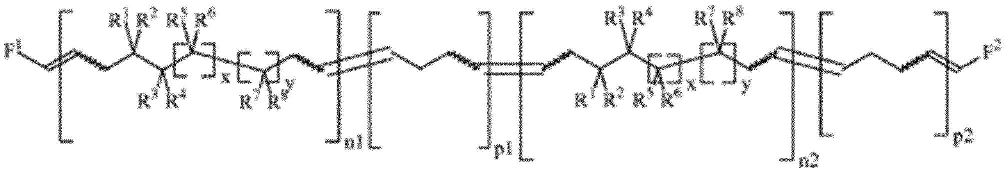

(II')

9. Kohlenwasserstoffpolymer nach einem der Ansprüche 1 bis 2, **dadurch gekennzeichnet, dass** n1 und n2 jeweils gleich 0 sind, wobei das Polymer die folgende Formel (III) hat:

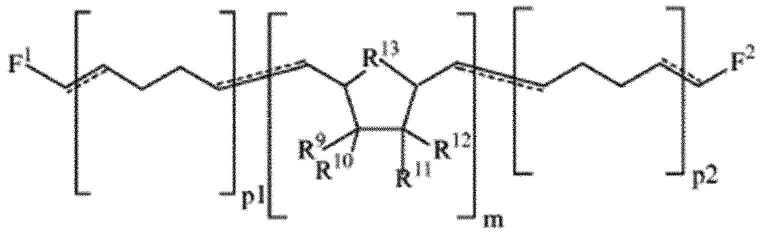

(III)

10. Kohlenwasserstoffpolymer nach Anspruch 9, **dadurch gekennzeichnet, dass** es die folgende Formel (III') hat:

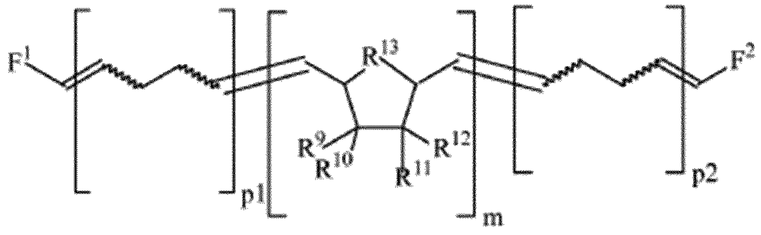

(III')

**11.** Kohlenwasserstoffpolymer nach einem der Ansprüche 1 bis 2, **dadurch gekennzeichnet, dass** n1, n2 und m jeweils gleich 0 sind, wobei das Polymer die folgende Formel (IV) hat:

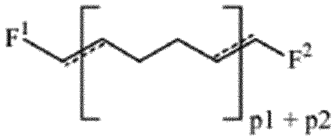

(IV)

**12.** Kohlenwasserstoffpolymer nach Anspruch 11, **dadurch gekennzeichnet, dass** es die folgende Formel (IV') hat:

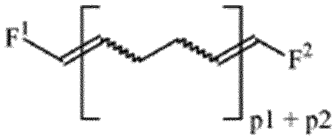

(IV')

**13.** Verfahren zur Herstellung eines Kohlenwasserstoffpolymers wie in einem der Ansprüche 1 bis 12 definiert, wobei das Verfahren einen Schritt der ringöffnenden Metathesepolymerisation durch metathetische Ringöffnung in Gegenwart:

(a) eines Grubbs-Metathesekatalysators vom Typ Ruthenium-Carben der 2. Generation;
(b) eines Kettenübertragungsmittels, das unter einem Mono- oder Di-exo-vinylencyclocarbonat mit der jeweiligen Formel (B1) oder (B2) ausgewählt ist:

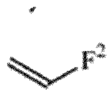

(B1)

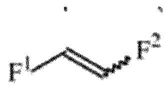

(B2)

wobei es sich versteht, dass in den obigen Formeln:

- die Bindung  eine Kohlenstoff-Kohlenstoff-Einfachbindung ist, die geometrisch zu einer Seite oder zur anderen in Bezug auf die Doppelbindung ausgerichtet ist;

c) einer Verbindung mit der Formel (C):

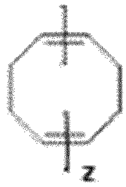

(C)

(d) gegebenenfalls einer Verbindung mit der Formel (D):

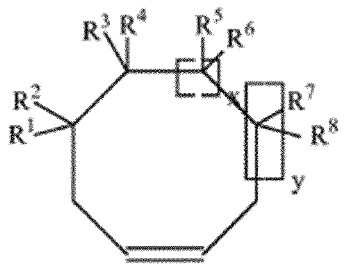

(D)

(e) gegebenenfalls einer Verbindung mit der Formel (E):

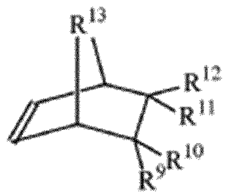

(E)

umfasst, wobei der Polymerisationsschritt ferner durchgeführt wird:

- über eine Dauer von 2 bis 24 Stunden und bei einer Temperatur, die in einem Intervall von 20 bis 60 °C liegt; und
- mit einem Verhältnis r gleich dem Verhältnis der Molzahl des CTA:
  - zur Molzahl der Verbindung der Formel (C), wenn diese das einzige Reagenz außer dem CTA ist, das bei der Reaktion eingesetzt wird, oder
  - zur Summe der Molzahl der Verbindung der Formel (C) und der Molzahl der Verbindungen der Formel (D) und/oder (E), wenn die Verbindungen der Formel (D) und/oder (E) ebenfalls bei der Reaktion eingesetzt werden,

das in einem Intervall von 0,0010 bis 1,0 liegt.

**14.** Verwendung des Kohlenwasserstoffpolymers wie in einem der Ansprüche 1 bis 12 definiert als Mischung mit einer Aminoverbindung mit mindestens zwei Aminogruppen als Klebstoff.

**15.** Verfahren zum Fügen von zwei Substraten durch Kleben, umfassend:

- das Beschichten mindestens eines der beiden zu fügenden Substrate mit einer flüssigen Klebstoffzusammensetzung, die durch Mischen einer Aminoverbindung mit mindestens zwei Aminogruppen mit dem Kohlenwasserstoffpolymer wie in einem der Ansprüche 1 bis 10 definiert erhalten wird; dann
- das tatsächliche Kontaktieren der beiden Substrate.

**Claims**

**1.** Hydrocarbon-based polymer comprising two exo-vinylene cyclocarbonate end groups, said hydrocarbon-based polymer having the formula (I):

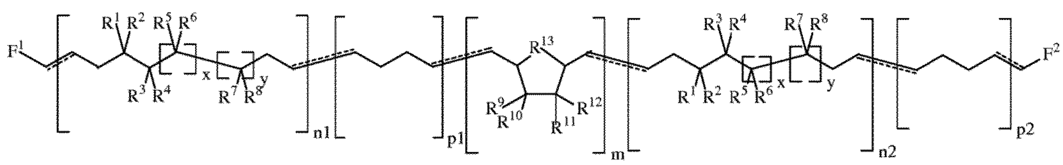

(I)

in which:

- $F^1$ and $F^2$ are the exo-vinylene cyclocarbonate monovalent radicals, of formulae (IIa) and (IIb) respectively:

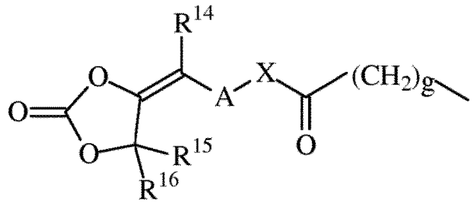

(IIa)

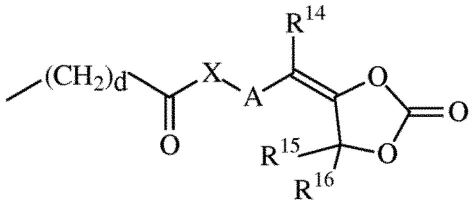

(IIb)

in which:

- g and d, which are identical or different, represent an integer equal to 0, 1, 2 or 3;
- A represents a C1-C6 alkylene divalent radical;
- X is an oxygen atom or a nitrogen-containing group $NR^{17}$ where $R^{17}$ is a C1-C6 alkyl group;
- $R^{14}$, $R^{15}$ and $R^{16}$, which are identical or different, each represent a hydrogen atom, a C1-C6 alkyl group, a C5-C6 cycloalkyl group, a phenyl group or an alkylphenyl group with a C1-C4 alkyl chain;

- each carbon-carbon bond of the main chain of the polymer, denoted ------ represents a double bond or a single bond, in accordance with the valency rules of organic chemistry;
- $R^1$, $R^2$, $R^3$, $R^4$, $R^5$, $R^6$, $R^7$ and $R^8$, which are identical or different, represent:

    - a hydrogen or halogen atom; or
    - a radical comprising from 1 to 22 carbon atoms selected from alkyl, alkenyl, alkoxycarbonyl, alkenyloxycarbonyl, alkylcarbonyloxy and alkenylcarbonyloxy, it being possible for the hydrocarbon-based chain of said radical to be interrupted by at least one oxygen atom or one sulfur atom; in addition:
    - at least one of the $R^1$ to $R^8$ groups can form, with at least one other of the $R^1$ to $R^8$ groups and with the carbon atom(s) to which said groups are joined, a saturated or unsaturated, optionally substituted, hydrocarbon-based, 3- to 10-membered ring or heterocycle; and
    - at least one of the pairs ($R^1$, $R^2$), ($R^3$, $R^4$), ($R^5$, $R^6$) and ($R^7$, $R^8$) can form, with the carbon atom to which said pair is joined, a C=O carbonyl group or a group with 2 carbon atoms joined by a double bond: C=C, the other carbon atom of which bears 2 substituents selected from a hydrogen atom or a $C_1$-$C_4$ alkyl radical;

- x and y are integers, which are identical or different, within a range from 0 to 6, the sum x + y being within a range from 0 to 6;
- $R^9$, $R^{10}$, $R^{11}$ and $R^{12}$, which are identical or different, represent:

    - a hydrogen or halogen atom; or
    - a radical comprising from 1 to 22 carbon atoms and selected from alkyl, alkenyl, alkoxycarbonyl, alkenyloxycarbonyl, alkylcarbonyloxy, alkenylcarbonyloxy and alkylcarbonyloxyalkyl, it being possible for the hydrocarbon-based chain of said radical to be interrupted by at least one oxygen atom or one sulfur atom; in addition:
    - at least one of the $R^9$ to $R^{12}$ groups can form, with at least one other of the $R^9$ to $R^{12}$ groups and with the carbon atom(s) to which said groups are joined, a saturated or unsaturated, optionally substituted, hydrocarbon-based, 3- to 10-membered ring or heterocycle; and
    - at least one of the pairs ($R^9$, $R^{10}$) and ($R^{11}$, $R^{12}$) can form, with the carbon atom to which said pair is joined, a group of 2 carbon atoms joined by a double bond: C=C, the other carbon atom of which bears 2 substituents selected from a hydrogen atom or a $C_1$-$C_4$ alkyl radical; and
    - the carbon atom bearing one of the groups of the pair ($R^9$, $R^{10}$) can be joined to the carbon atom bearing one of the groups of the pair ($R^{11}$, $R^{12}$) by a double bond, it being understood that, in accordance with the valency rules, only one of the groups of each of these 2 pairs is then present;

- $R^{13}$ represents:

- an oxygen or sulfur atom, or
- a divalent radical $-CH_2-$, -C(=O)- or $-NR^0-$ in which $R^0$ is an alkyl or alkenyl radical comprising from 1 to 22 carbon atoms;

- n1 and n2, which are identical or different, are each an integer or zero, the sum of which is denoted by n;
- m is an integer greater than or equal to 0;
- p1 and p2, which are identical or different, are each an integer or zero, the sum p1+p2 of which is non-zero and satisfies the equation: $p1 + p2 = q \times (z + 1)$ in which:

    - q is an integer greater than 0; and
    - z is an integer ranging from 1 to 5; and

- n1, n2, m, p1 and p2 further being such that the number-average molecular weight Mn of the polymer of formula (I) is within a range from 400 to 100 000 g/mol and its polymolecularity index is within a range from 1.0 to 3.0; said Mn and polymolecularity index being measured by size exclusion chromatography with use of polystyrene calibration.

**2.** Hydrocarbon-based polymer according to Claim 1, **characterized in that**:

- g or d are equal to 0;
- A represents a C1-C3 alkylene divalent radical;
- X is an oxygen atom or a nitrogen-containing group $NR^{17}$ where $R^{17}$ is a C1-C3 alkyl group;
- $R^{14}$ is a hydrogen atom;
- $R^{15}$ and $R^{16}$, which are identical or different, each represent a C1-C3 alkyl group;
- z is an integer equal to 1 or 2; and/or
- the number-average molecular weight Mn is within a range from 1000 to 50 000 g/mol, and the polymolecularity index is within a range from 1.4 to 2.0.

**3.** Hydrocarbon-based polymer according to either of Claims 1 and 2, **characterized in that** its main chain comprises the repeating unit repeated n1+n2 times and the repeating unit repeated m times.

**4.** Hydrocarbon-based polymer according to Claim 3, **characterized in that**:

- $R^1$, $R^2$, $R^3$, $R^4$, $R^5$, $R^6$, $R^7$ and $R^8$ represent a hydrogen atom or an alkyl radical comprising from 1 to 14 carbon atoms;
- the integers x and y are within a range from 0 to 2, the sum x + y being within a range from 0 to 2; and/or
- $R^9$, $R^{10}$, $R^{11}$ and $R^{12}$ represent a hydrogen atom or a radical, the hydrocarbon-based portion of which comprises from 1 to 14 carbon atoms.

**5.** Hydrocarbon-based polymer according to either of Claims 1 and 2, **characterized in that**:

- when m is non-zero and n1 and n2 are each equal to 0, then the ratio: m/(p1 + p2 + m) is within the range from 30% to 70%; or
- when m is equal to 0 and when the sum n1 + n2 is non-zero, then at least one of the groups $R^1$, $R^2$, $R^3$, $R^4$, $R^5$, $R^6$, $R^7$ and $R^8$ is other than a hydrogen atom, and the ratio: (n1 + n2)/(p1 + p2 + n1 + n2) is within the range from 30% to 70%; or
- when m is non-zero, when the sum n1 + n2 is non-zero and when each of the groups $R^1$, $R^2$, $R^3$, $R^4$, $R^5$, $R^6$, $R^7$ and $R^8$ is a hydrogen atom, then the ratio: m/(p1 + p2 + n1 + n2 + m) is within the range from 30% to 70%;
- when m is non-zero, when the sum n1 + n2 is non-zero and when at least one of the groups $R^1$, $R^2$, $R^3$, $R^4$, $R^5$, $R^6$, $R^7$ and $R^8$ is other than a hydrogen atom, then the ratio: (m + n1 + n2) / (p1 + p2 + n1 + n2 + m) is within the range from 30% to 70%.

**6.** Hydrocarbon-based polymer according to one of Claims 1 to 3, **characterized in that** it has the formula (I') below:

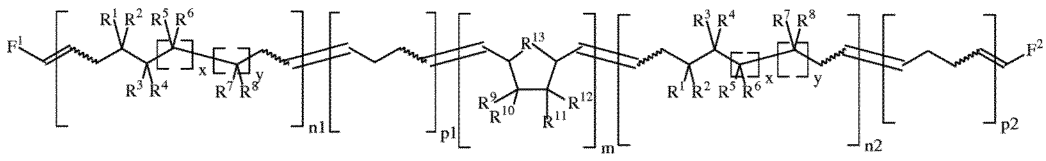

(I')

7. Hydrocarbon-based polymer according to either of Claims 1 and 2, **characterized in that** it has the formula (II) below:

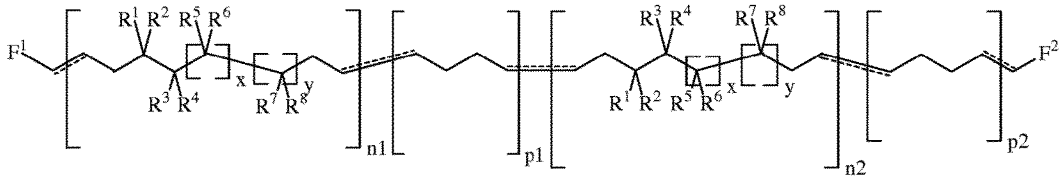

(II)

8. Hydrocarbon-based polymer according to Claim 7, **characterized in that** it has the formula (II') below:

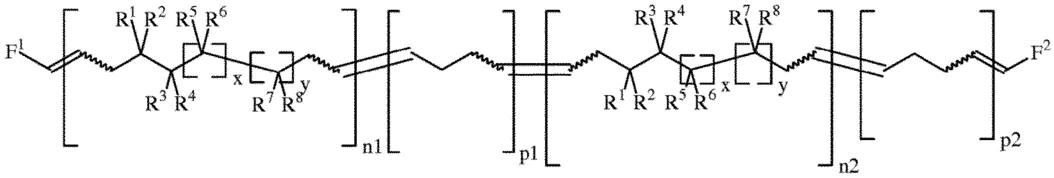

(II')

9. Hydrocarbon-based polymer according to either of Claims 1 and 2, **characterized in that** n1 and n2 are each equal to 0, the polymer being of formula (III) below:

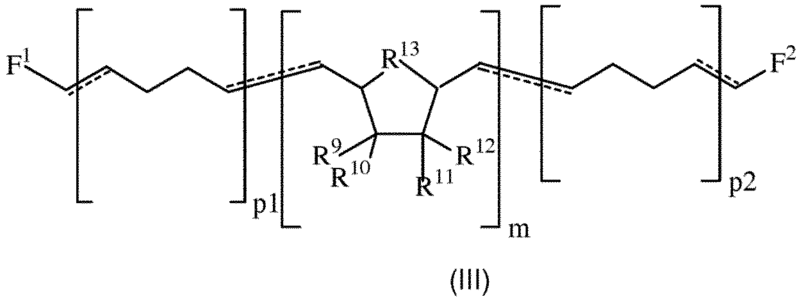

(III)

10. Hydrocarbon-based polymer according to Claim 9, **characterized in that** it has the formula (III') below:

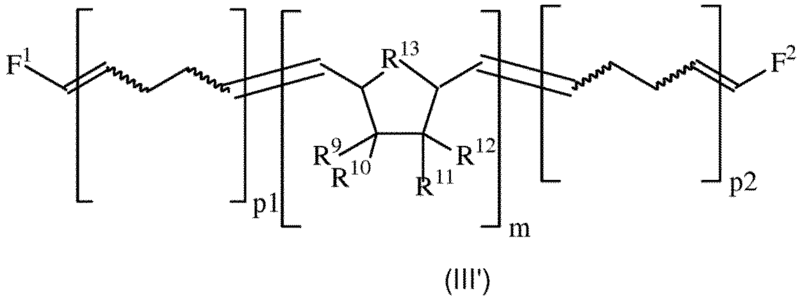

(III')

11. Hydrocarbon-based polymer according to either of Claims 1 and 2, **characterized in that** n1, n2 and m are each

equal to 0, the polymer being of formula (IV) below:

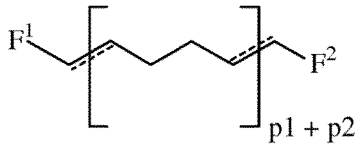

(IV)

**12.** Hydrocarbon-based polymer according to Claim 11, **characterized in that** it has the formula (IV') below:

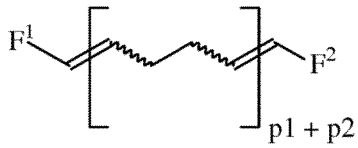

(IV')

**13.** Process for preparing a hydrocarbon-based polymer as defined in one of Claims 1 to 12, said process comprising a step of ring-opening metathesis polymerization, in the presence of:

(a) a 2nd generation Grubbs ruthenium carbene metathesis catalyst;
(b) a chain-transfer agent selected from a mono- or di-exo-vinylene cyclocarbonate of formula (B1) or (B2) respectively:

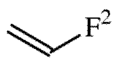

(B1)

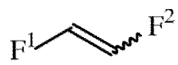

(B2)

it being understood that in the above formulae:

- the bond  is a carbon-carbon single bond geometrically oriented on one side or the other relative to the double bond;

(c) a compound of formula (C):

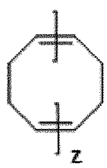

(C)

(d) optionally a compound of formula (D):

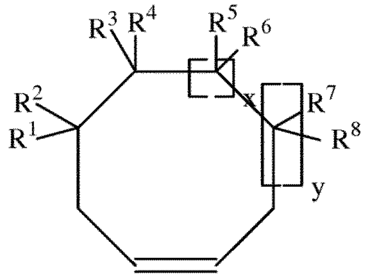

(D)

(e) optionally a compound of formula (E):

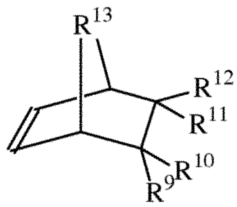

(E)

said polymerization step being further carried out:

- for a duration ranging from 2 to 24 hours and at a temperature within a range from 20°C to 60°C; and
- with a ratio r equal to the ratio of the number of moles of said CTA:
- to the number of moles of the compound of formula (C), if it is the only reagent other than the CTA used in the reaction, or
- to the sum of the number of moles of the compound of formula (C) and the number of moles of compounds of formula (D) and/or (E), if the compounds of formula (D) and/or (E) are also used in the reaction, within a range from 0.0010 to 1.0.

**14.** Use, as adhesive, of the hydrocarbon-based polymer as defined in one of Claims 1 to 12, as a mixture with an amine compound comprising at least two amine groups.

**15.** Process for assembling two substrates by bonding, comprising:

- coating at least one of the two substrates to be assembled with a liquid adhesive composition obtained by mixing an amine compound comprising at least two amine groups with the hydrocarbon-based polymer as defined in one of Claims 1 to 12; and then
- actually bringing the two substrates into contact.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2014091173 A
- US 5849851 A
- DE 1098953
- DE 3433403
- WO 200104173 A
- WO 2011038057 A


### Littérature non-brevet citée dans la description


- *CHEMICAL ABSTRACTS,* 172222-30-9
- *CHEMICAL ABSTRACTS,* 246047-72-3
- **A. DIALLO et al.** *Polymer Chemistry,* 07 Avril 2014, vol. 5 (7), 2583-2591
- **KOBAYASHI et al.** *J. Am. Chem. Soc.,* 2011, vol. 133, 5794-5797